(19) Europäisches Patentamt / European Patent Office / Office européen des brevets

(11) **EP 3 884 213 B1**

(12) **EUROPEAN PATENT SPECIFICATION**

(45) Date of publication and mention
of the grant of the patent:
**23.10.2024 Bulletin 2024/43**

(21) Application number: **19887313.5**

(22) Date of filing: **14.11.2019**

(51) International Patent Classification (IPC):
**F24D 13/02** $^{(2006.01)}$ **E04F 15/02** $^{(2006.01)}$
**F16B 5/00** $^{(2006.01)}$ **F24D 3/12** $^{(2006.01)}$

(52) Cooperative Patent Classification (CPC):
**E04F 15/02038; F16B 5/0056; F24D 13/022;**
**F24D 13/024;** E04F 2201/0169; E04F 2201/03;
E04F 2290/023; F16B 2200/93; F24D 3/122;
F24D 3/127; F24D 2220/2081; Y02B 30/00

(86) International application number:
**PCT/SE2019/051153**

(87) International publication number:
**WO 2020/106202 (28.05.2020 Gazette 2020/22)**

(54) **A PANEL AND AN ELECTRICAL END CONNECTOR, A METHOD FOR COUPLING OF PANELS AND A HEATING SYSTEM**

PANEEL UND ELEKTRISCHER ENDVERBINDER, VERFAHREN ZUM VERBINDEN VON PLATTEN UND HEIZSYSTEM

PANNEAU ET CONNECTEUR D'EXTRÉMITÉ ÉLECTRIQUE, PROCÉDÉ DE COUPLAGE DE PANNEAUX ET SYSTÈME DE CHAUFFAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2018 SE 1851449**

(43) Date of publication of application:
**29.09.2021 Bulletin 2021/39**

(73) Proprietor: **Heat Click Company AB**
**611 35 Nyköping (SE)**

(72) Inventors:
• **LÖFHOLM, Håkan Johan**
**141 44 HUDDINGE (SE)**

• **NYSTRÖM, Taisto Kalevi**
**611 30 Nyköping (SE)**

(74) Representative: **Ehrner & Delmar Patentbyrå AB**
**Götgatan 78**
**118 30 Stockholm (SE)**

(56) References cited:
| | |
|---|---|
| EP-A2- 1 884 716 | EP-A2- 1 884 716 |
| WO-A1-2004/048854 | WO-A1-2018/217152 |
| WO-A1-2018/217152 | DE-A1- 102013 113 233 |
| KR-A- 20150 133 464 | SE-A1- 1 400 611 |
| US-A1- 2006 101 769 | US-A1- 2006 101 769 |
| US-A1- 2009 173 032 | US-A1- 2011 272 392 |

EP 3 884 213 B1

**Description**

**Field of invention**

The present invention relates to a panel as defined in the preamble of claim 1. The present invention also relates to an electrical end connector for electrically and mechanically coupling the panel to an adjacent panel, to a method for coupling a panel to an adjacent panel, and a heating system.

**Background of invention**

The following background information is a description of the background of the present invention, which thus not necessarily has to be a description of prior art.

One of our times big challenges is to reduce the overall energy consumption in the world. In many parts of the world, houses, apartments, offices, shops, factories and/or other public or non-public spaces, need to be heated in order to provide an acceptable environment for people spending time in these spaces. Such heating thus needs to provide a comfortable temperature at the same time as the energy consumption should be kept at a minimum.

Underfloor heating may be used for reducing the energy consumption at the same time as an acceptable temperature/environment is provided. It is nowadays common to install underfloor heating using warm water or electricity as a heat source when stone and/or ceramic tiles are used for covering the floor. Also, underfloor heating may be used when wooden floors, such as e.g. parquet flooring, are used for covering the floors.

Traditionally, the heat used for providing the underfloor heating has been created by warm water flowing in pipes/tubes under the floor boards and/or by electricity flowing through resistance in sheet materials arranged under the floor boards. Such a known solution is described in US2008/0210679, in which a mat/sheet "denoted heating device 1" in the document is arranged under a "floor covering 12", i.e. under the actual floor boards. These pipes/tubes and/or sheet materials are thus arranged underneath the wooden floor, or underneath the stone and/or ceramic tiles. These traditional solutions have a disadvantage in that they are not very efficient in providing the heat into the space where it is actually needed, i.e. into the space above the wooden floor, and/or above the stone and/or ceramic tiles. This is due to the fact that the heat is created underneath the wooden floor, or underneath the stone and/or ceramic tiles, and thus needs to be transported through the entire wooden floor, and/or through the entire stone and/or ceramic tiles to reach the space where the e.g. people are to be present, i.e. to reach the space which should be heated. Also, a large part of the created heat is transported in the opposite direction, i.e. away from the wooden floor, or the stone and/or ceramic tiles, which also means away from the space which should be heated. Thus, a lot of the created heat is lost in such traditional heating systems, wherefore the heating system is inefficient and wastes energy.

In a prior art solution shown in US20060289144, a flooring board is instead provided with an embedded heating foil within the board, which is arranged for creating heat when being supplied with electrical energy. Hereby, the created heat is much more efficiently provided to the space in which it is needed, since the heat is created within the actual flooring board, instead of underneath it.

KR20150133464, WO2018/217152 and EP1884716 disclose other prior art solution for flooring boards with heating arranged to be coupled to adjacent flooring boards.

**SUMMARY OF INVENTION**

The flooring board shown in US20060289144 has, however, a number of problems related to the power supply to the flooring boards. The flooring board has electrical connecting means arranged on the grooves and tongues of the quick coupling joints being used for mechanically coupling the flooring board together with other flooring boards. Since the electrical connecting means are arranged on the grooves and tongues of the joint, the electrical connecting means will also experience small movements when pressure is applied on the flooring boards. The parts of the joints, i.e. the grooves and the tongues of the joints, move slightly every time for example a person walks on the flooring boards. Hereby, the electrical connecting means in US20060289144 will become worn out after some use. Also, even a lost contact may result from the wear of the electrical connecting means, whereby the heating function is lost. Also, a short circuit may be caused by the wear of the electrical connecting means, which may be hazardous due to e.g. a risk of fire. These possible problems are of course very unfortunate, especially for a floor having a long expected life time. Such a floor may have to be exchanged after a considerably shorter time than expected due to a malfunctioning heating function of the floor.

It is therefore an object of the present invention to provide a panel, an electrical end connector, a method, and a heating system that solve at least some of the above stated problems and/or disadvantages.

The object is achieved by the above mentioned panel according to the characterizing portion of claim 1. The panel may in this disclosure be understood to correspond to a panel assembly comprising the panel and an electrical end connector mounted on/attached to the panel for coupling the panel to an adjacent panel.

The panel/panel assembly includes:

- a base layer;
- a heat providing layer attached to the base layer, the heat being created by electric energy;
- a covering layer attached to the heat providing layer;
- first and second opposite longitudinal sides including first and second longitudinal panel coupling means, respectively, arranged for coupling the panel to adjacent panels;
- first and second opposite end sides including first and second end panel coupling means, respectively, arranged for coupling the panel to adjacent panels; **characterized by**
- the first and second end panel coupling means including first and second end panel grooves, respectively, the first and second end panel grooves at least partly extending between the first and second opposite longitudinal sides, and
- at least one electrical end connector arranged in one or more of the first and second end panel grooves of the first and second end panel coupling means, each of the at least one electrical end connector including first and second end portions and an at least partly resilient portion located between the first and second end portions, the at least partly resilient portion at least partly including an electrically conductive material and at least partly protruding from the one or more of the first and second end panel coupling means, thereby providing an electrical connection between the heat providing layer of the panel and a corresponding heat providing layer of at least one adjacent panel coupled to the panel.

Thus, the first and second end panel coupling means include first and second end panel grooves, respectively, the first and second end panel grooves at least partly extending between the first and second opposite longitudinal sides, and the at least one electrical end connector is arranged in one or more of the first and second end panel grooves.

According to an embodiment of the present invention, the at least partly resilient portion of the at least one electrical end connector is arranged to protrude at least partly from the one or more of the first and second end panel grooves in its relaxed state.

According to an embodiment of the present invention, the at least partly resilient portion is arranged to protrude at least partly more than a width $W_{end\_con}$ of the at least partly resilient portion of the at least one electrical end connector.

According to an embodiment of the present invention, the at least partly resilient portion of the at least one electrical end connector is arranged to be pressed into at least one of the first and second end panel grooves by at least one of first and second end panel coupling means of an adjacent panel when the panel is being coupled to the adjacent panel.

According to an embodiment of the present invention, the at least partly resilient portion of the at least one electrical end connector is arranged to relax into, i.e. to at least partly return towards its relaxed state by relaxing into, at least one of the first and second end panel grooves of the adjacent panel when the panel is coupled to the adjacent panel.

According to an embodiment of the present invention, the at least partly resilient portion of the at least one electrical end connector is arranged to be snapped into at least one of first and second end panel grooves of the adjacent panel, thereby mechanically locking the panel to the adjacent panel.

According to an embodiment of the present invention, the first and second end panel grooves have a height $H_{end\_groove}$ essentially equal to a height $H_{end\_con}$ of the at least partly resilient portion of the at least one electrical end connector; $H_{end\_groove} = H_{end\_con}$.

According to an embodiment of the present invention, at least one of the first and second end panel grooves have a first depth $D_{end\_groove1}$ essentially equal to or larger than a width $W_{end\_con}$ of the at least partly resilient portion of the at least one electrical end connector; $D_{end\_groove1} \geq W_{end\_con}$.

According to an embodiment of the present invention, at least one of the first and second end panel grooves have a second depth $D_{end\_groove2}$ smaller than a width $W_{end\_con}$ of the at least partly resilient portion of the at least one electrical end connector; $D_{end\_groove2} < W_{end\_con}$.

According to an embodiment of the present invention, the at least partly resilient portion of the at least one electrical end connector includes a first and a second electrically conducting tongue.

According to an embodiment of the present invention, the first and second electrically conducting tongues of the at least partly resilient portion are arranged to be in electrical contact with the heat providing layer of the panel and with a corresponding heat providing layer of an adjacent panel being coupled to the panel.

According to an embodiment of the present invention, the heat providing layer of the panel includes first and second electrically conducting parts adjacent to at least one of the first and second end panel grooves.

According to an embodiment of the present invention, the first and second electrically conducting tongues of the at least partly resilient portion are arranged to be in electrical contact with the first and second electrically conducting parts, respectively, of the heat providing layer of the panel and with corresponding first and second electrically conducting parts, respectively, of a corresponding heat providing layer of an adjacent panel being coupled to the panel.

According to an embodiment of the present invention, the first and second electrically conducting tongues are at least partly wave-formed.

According to an embodiment of the present invention, the at least partly resilient portion of the at least one end connector is arranged to be located closer to the first end portion than to the second end portion, or vice versa.

According to an embodiment of the present invention, the at least one end connector has a length L and a most protruding part of the at least partly resilient portion of the at least one electrical end connector is arranged to be located a first length L1 from at least one of the first and second end portions, wherein a ratio between the first length L1 and length L is at least one in the group of:

$$0.5 < L1/L < 0.15;$$

$$0.4 < L1/L < 0.2; \text{ and}$$

and

$$L1/L = 0.3.$$

According to an embodiment of the present invention, the at least partly resilient portion of the at least one electrical end connector includes a resilient material.

According to an embodiment of the present invention, the at least partly resilient portion of the at least one electrical end connector includes first and second portions being resiliently connected to each other.

According to an embodiment of the present invention, the first and second portions of the at least partly resilient portion are resiliently connected to each other by means of at least one in the group of:

a spring joint;
a resilient member.

According to an embodiment of the present invention, at least one of the first and second portions of the at least partly resilient portion includes a resilient material.

According to an embodiment of the present invention, the first and second portions of the at least partly resilient portion include first and second electrically conducting tongues, respectively.

According to an embodiment of the present invention, at least first and second longitudinal grooves are arranged in the base layer from the first end side to the second end side and facing the heat providing layer, the at least first and second longitudinal grooves being arranged in parallel with, and having at least first and second distances to the first and second longitudinal sides, respectively.

According to an embodiment of the present invention, the panel further includes:

- at least first and second electrical power supply end connectors arranged in the at least first and second longitudinal grooves, respectively, at the first end side or the second end side, the at least first and second electrical power supply end connectors being arranged to provide an electrical connection between the heat providing layer of the panel and an electrical energy providing arrangement.

According to an embodiment of the present invention, at least one insulating core is included in the base layer, the at least one insulating core having heat insulating and/or sound absorbing properties.

According to an embodiment of the present invention, the heat providing layer is arranged at a heat depth $D_{heat}$ from the visible surface 104 being one in the group of:

0.1 mm to 3 mm;
0.4 mm to 1 mm;
0.5 mm to 0.8 mm; and
0.6 mm.

The above mentioned object is also achieved by the above mentioned electrical end connector. The electrical end connector being insertable into one or more of the first and second end panel grooves of the first and second end panel coupling means of a panel and characterized by the at least one electrical end connector including first and second end portions and an at least partly resilient portion located between the first and second end portions, the at least partly resilient portion at least partly including an electrically conductive material and at least partly protruding from the one or more of the first and second end panel coupling means, thereby providing an electrical connection between the heat providing layer of the panel and a corresponding heat providing layer of at least one adjacent panel coupled to the panel.

When the panel and an adjacent panel are mechanically coupled together, the at least partly resilient portion of the electrical end connector is, according to various embodiments, inserted/received in first and second end panel grooves of both the panel and the adjacent panel, whereby the at least partly resilient portion of the electrical end connector provides for the electrical connection between the heat providing layers of the panel and of the adjacent panel.

The above mentioned object is also achieved by a method for coupling a panel to a corresponding adjacent panel characterized in:

- mechanically coupling the first panel to the adjacent panel by use of the electrical end connector of the panel, the first end panel coupling means of the panel, and the second end panel coupling means of the adjacent panel, thereby locking the first panel to the adjacent panel; and
- electrically connecting the first panel and the adjacent panel by use of the at least one electrical end connector of the first panel.

The above mentioned object is also achieved by a heating system. The heating system includes:

- at least one panel as described in this document; and
- an electrical energy providing arrangement, arranged adjacent to at least one of the first and the second end sides of the at least one panel for providing the electric energy to at least one first and at least one second electrical power supply end connectors.

The panel and heating system according to the present invention provide for an energy efficient and durable heating of essentially all sorts of spaces.

By integrating the heat providing layer into a construction panel, such as e.g. a flooring panel, a wall panel and/or a ceiling panel, it is possible to efficiently, precisely and reliably regulate the indoor climate/temperature in spaces delimited by a floor, walls and a ceiling at least partly including such panels.

The heat providing layer is arranged very close to the space to be heated, since it is located directly under the covering/decorative layer. Hereby, the created heat may be very efficiently transported to the space to be heated when the panel according to the present invention is used. By this efficient heat transportation to the space to be heated, the consumption of electric energy being used for creating the heat is minimized.

The panel according to some embodiments of the present invention is cuttable in the sense of being possible to cut off and still be used for laying floors. This is due to the fact that the locations of the first and second longitudinal grooves are well defined, which also results in a well-defined placement of the first and second electrical power supply end connectors placed in the first and second grooves.

By usage of the present invention, a secure and reliable power supply to the panel is assured. Also, the design of the electrical end connector according to the present invention simplifies mechanical coupling of panels together, at the same time as a stable electrical coupling is provided.

Also, the electrical end connector of the panel according to the present invention provides for a reliable and secure electrical contact to adjacent panels. Hereby, electrical energy to be used for creating the heat in the heat providing layer reliably reaches each one of mechanically and electrically coupled panels, and therefor also reaches the heat providing layers of each one of the panels.

The panel according to the present invention may be produced and installed cost efficiently. Since the heat may be created by use of low voltages, such as 4-60 Volts, e.g. approximately 25 Volts or approximately 50 Volts, the panels may even be installed by a layman, i.e. by a non-professional. Thus, by installation of the panels according to the present invention, there may not be a need for an electrician to be present, depending on laws and regulations where the panel is to be installed/used, which dramatically reduces the total cost for an end user, e.g. a house owner. Prior art electrical underfloor heating systems are often driven by much higher voltages, e.g. 230 Volts, which must be installed by a certified electrician.

Some known underfloor heating systems include a lower voltage mat/sheeting creating the heat, which is arranged under the wooden floor or underneath the stone and/or ceramic tiles. One such example is the above-mentioned heating device 1 in US2008/0210679, which is arranged under the floor covering 12. This arrangement results in considerable energy losses as described above. Also, this prior art lower voltage mat/sheeting is often difficult to properly install, wherefore a skilled person often must adapt e.g. the size of the mat/sheeting to fit the area to be covered by the floor. This increases the costs for installation of the floors.

The panel according to the present invention, however, already itself includes the heat providing layer, and does thus not need any heat creating mats to be installed underneath it.

As a non-limiting example, a power per floor area in an interval of approximately, 10-40 $W/M_2$, or 20-30 $W/m^2$ may be used for creating the heat. The used power per floor area may be seen as a balance between differing characteristics for the floor and/or heating. Higher power generally results in shorter heat providing circuits, which is an advantage when cutting off the panels since the part of the panel without heating due to the cutting off becomes small. However, for lower powers per floor area, the resistances of the heat providing circuits are less critical than for higher powers and lower resistances.

Detailed exemplary embodiments and advantages of the panel, the heating system, and the method according to the invention is hereafter described with reference to the appended drawings illustrating some preferred embodiments.

## BRIEF DESCRIPTION OF THE DRAWINGS

Embodiments of the invention are described in more detail with reference to attached drawings illustrating examples of embodiments of the invention in which:

Figure 1 shows a schematic end view of a panel according to some embodiments of the present invention,

Figures 2a-g show schematic views of a panel and an adjacent panel according to some embodiments of the present invention,

Figures 3a-c show schematic views of an electrical end connector or a panel according to some embodiments of the present invention,

Figures 4a-c show schematic views of a panel and an electrical end connector according to some embodiments of the present invention,

Figures 5a-e show schematic views of a panel with an insulating core according to some embodiments of the present invention,

Figure 6 shows a floor including multiple coupled panels according to some embodiments of the present invention,

Figure 7 schematically shows a heating system according to some embodiments of the present invention,

Figure 8 schematically shows a heating system according to some embodiments of the present invention,

Figure 9 schematically shows a complete heating system according to some embodiments of the present invention, and

Figure 10 schematically shows a heating system according to some embodiments of the present invention.

## DETAILED DESCRIPTION OF INVENTION

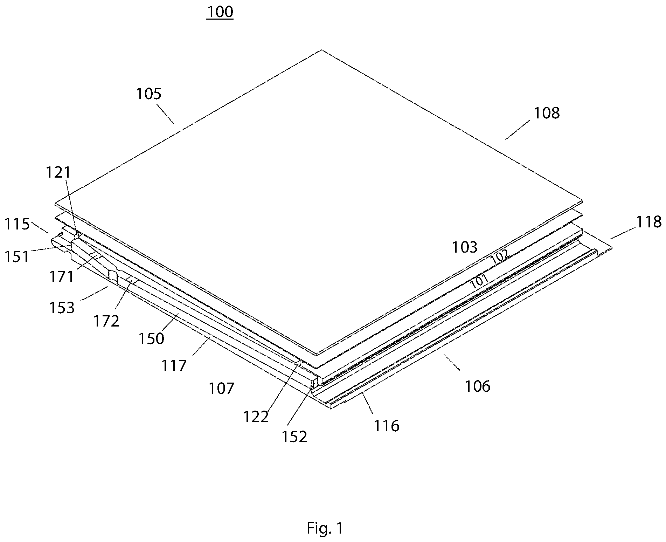

Figures 1, 2a-g, 3a-c, and 4a-c schematically show views of a panel 100 and/or an electrical end connector 150 according to various embodiments of the present invention.

As is shown e.g. in figure 1, the panel 100 is delimited by a first longitudinal side 105 and by a second longitudinal side 106 being opposite the first longitudinal side 105. The panel 100 is also delimited by a first end side 107 and by a second end side 108 being opposite the first end side 107.

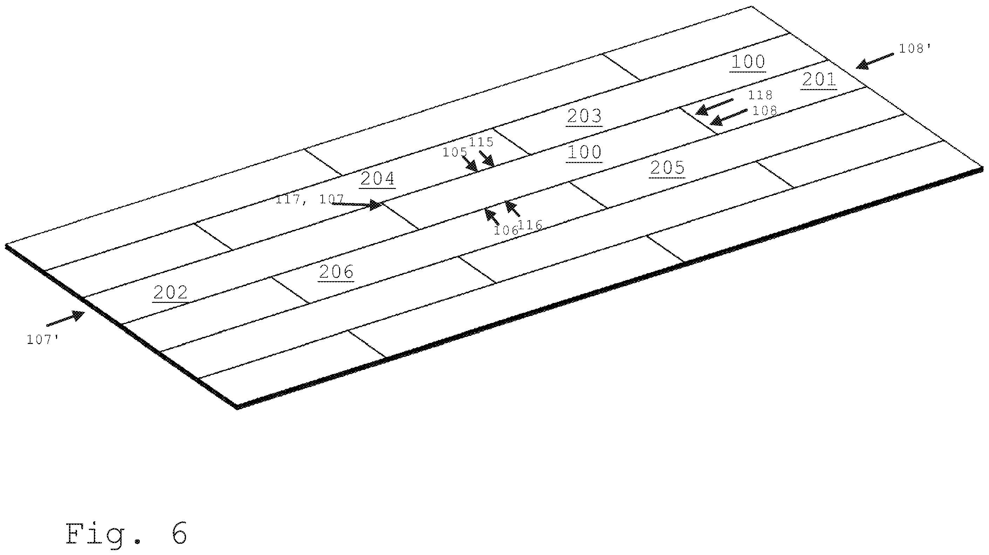

The first longitudinal side 105, the second longitudinal side 106, the first end side 107, and the second end side 108 may be provided with panel coupling means, such as a groove/female and tongue/rabbet forming e.g. "click joints" 115, 116, 117, 118, respectively. The panel coupling means 115, 116, 117, 118 are, according to an embodiment, arranged in the base layer 101 at the first 105 and second 106 longitudinal sides of the panel 100, and at the first 107 and second 108 end sides of the panel 100, for mechanically coupling the panel 100 to at least one adjacent panel 201, 202, ... 206, i.e. to at least one other corresponding panel 201, 202, ..., 206 (as shown in figure 6), where the at least one other corresponding panel is provided with corresponding panel coupling means, in a known way.

The panel 100 further includes a base/core layer 101 and a covering/visual layer 103. The covering/visual layer 103 has a surface 104 possibly being visible from the space to be heated, i.e. from within the room in which the panel 100 covers a floor, wall and/or ceiling. The covering/visual layer 103 may have a suitable appearance/look, including colors and/or patterns.

The panel 100 further includes a heat providing layer 102 attached to the base layer 101, i.e. arranged between the base layer 102 and the covering/visual layer 103. This also means that the heat providing layer 102 is arranged very close to the space to be heated, i.e. directly underneath the thin covering/visual layer 103. The heat providing layer 102 may include essentially any material being electrically conducting and having an electrical resistance suitable for creating heat, i.e. an increased temperature, when current flows through the material. The material may be formed as a heat generating element, which may have a large number of shapes. For example, the heat providing layer 102 may comprise printed electronics, a film, one or more resistors, a sheet, a tape, a paint, or may have essentially any other shape or form suitable for creating heat through its electrical resistance and for being included in the panel 100 according to the present invention. Thus, for example, the heat providing layer 102 may comprise at least one heat generating element including printed electronics having an electrical resistance, at least one film having an electrical resistance, and/or one or more resistors having an electrical resistance.

As a non-limiting example, it may be mentioned that, when the electric energy has a voltage of 25 V, i.e. when the electrical energy providing arrangement delivers a voltage of 25 V is used as power supply, 23 $W/m_2$ may be created by the heat providing layer 102 according to an embodiment. The time constant for the temperature increase at the covering layer may be short, in the area of minutes, and a temperature increase of e.g. 3 °C may be quickly achieved.

The voltage drop increases with the squared length of the floor. For shorter floors, e.g. floors having a length shorter than 10 m, the voltage drop has little effect on the created heat. However, for longer floors, e.g. floor longer than 15 m, the voltage drop may noticeably affect the produced heat.

According to an embodiment of the present invention, the heat providing layer 102 is arranged at a heat depth $D_{heat}$ from the visible surface 104 in an interval of 0.1 mm - 3 mm, 0.4 mm - 1 mm, or 0.5 mm - 0.8 mm, and/or at a depth of 0.6 mm. This then also means that the covering layer 103 has a thickness $T_{cov}$ being equal to the heat depth $D_{heat}$; $T_{cov} = D_{heat}$; which results in an efficient transport of heat energy into the space to be heated, since the heat providing layer 102 is very close to the heated space.

According to an embodiment of the present invention, the layers of the panel 100, i.e. the base layer 101, the heat providing layer 102 and the covering layer 103 are attached/fixed to each other by use of an adhesive, such as e.g. a glue.

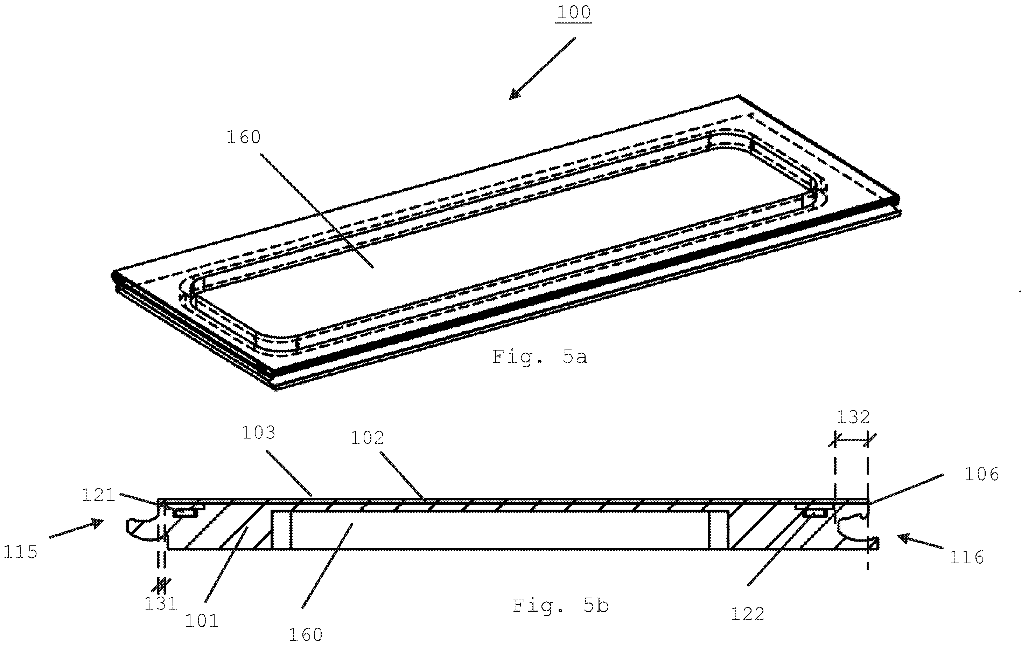

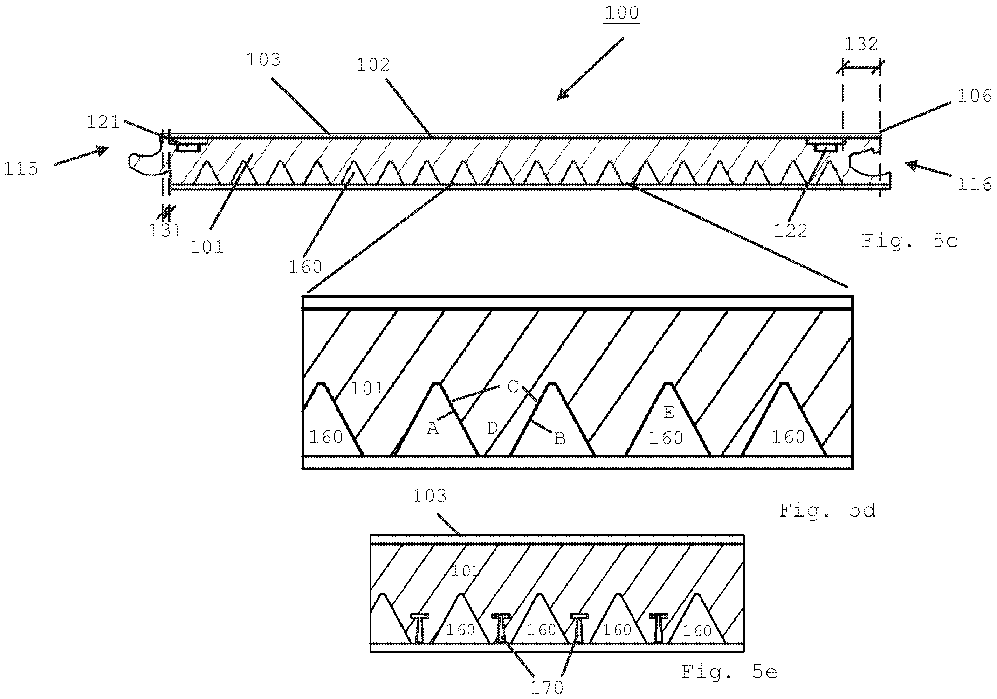

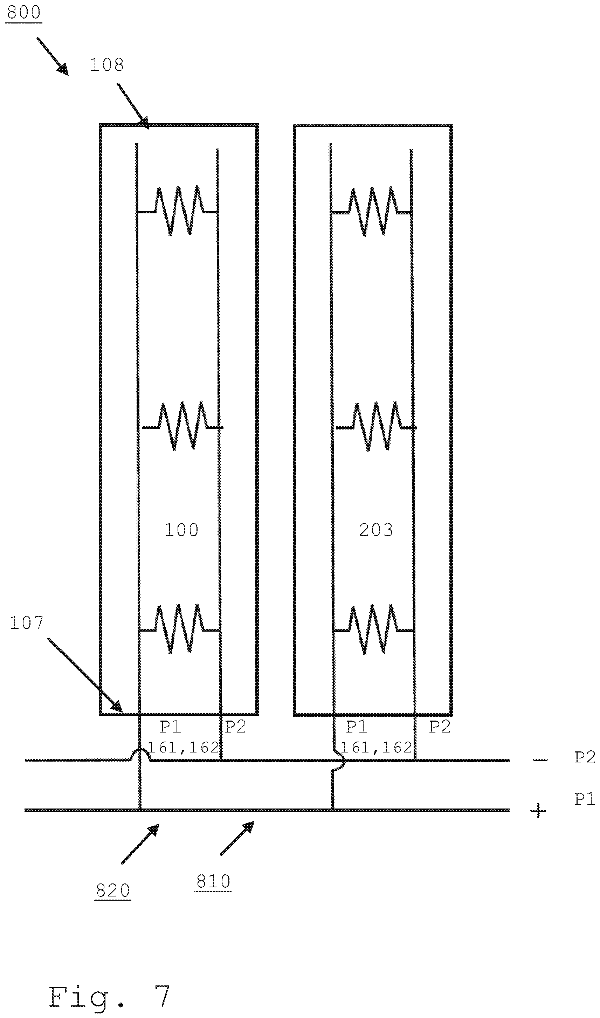

The panel 100 according to the present invention may according to some embodiments include a first longitudinal groove 121 arranged in parallel with, and having at least a first distance 131 to, the first longitudinal side 105, and a second longitudinal groove 122 arranged in parallel with, and having at least a second distance 132 to, the second longitudinal side 106 (as shown in figure 1 and 5b). The first 121 and second 122 longitudinal grooves may be arranged in the base layer 101 of the panel 100 and may extend from the first end side 107 to the second end side 108. The first 121 and second 122 longitudinal grooves face the heat providing layer 102, i.e. the opening/aperture of the grooves are directed towards the heat providing layer 102. The first 121 and second 122 longitudinal grooves may be used to provide an electrical connection between the heat providing layer 102 of the panel 100 and an electrical energy providing arrangement 810, as will be further described below with reference to figures 7-10.

The panel 100 according to the present invention further includes at least one electrical end connector 150 arranged at one or more of the first end panel coupling means 117 at the first end side 107, and the second end panel coupling means 118 at the second end side 108. More in detail, the first 117 and second 118 end panel coupling means include first 127 and second 128 end panel grooves, respectively. These first 127 and second 128 end panel grooves at least partly extend between the first 105 and second 106 opposite longitudinal sides of the panel. The at least one electrical end connector 150 is arranged in one or more of the first 127 and second 128 end panel grooves, respectively. Figure 1 shows an embodiment where an electrical end connector 150 is arranged at the first 117 coupling means at the first end side 107 of the panel 100.

The at least one electrical end connector 150 includes first 151 and second 152 end portions and an at least partly resilient portion 153 located between the first 151 and second 152 end portions. The at least partly resilient portion 153 is at least partly electrically conductive, i.e. at least partly include an electrically conducting material, such as e.g. a suitable metal. Thus, the at least partly resilient portion 153 may include one or more sections being resilient, and may also include one or more non-resilient sections. Further, the at least partly resilient portion 153 may include one or more sections of a conductive material, and may also include one or more sections of a non-conductive material. The at least partly resilient portion 153 is further at least partly protruding from the one or more of the first 117 and second 118 end panel coupling means when being arranged at the one or more of the first 117 and second 118 end panel coupling means. Thus, one or more sections of the at least partly resilient portion 153 may protrude from the one or more of the first 117 and second 118 end panel coupling means when being arranged therein.

These features make it possible for the at least partly resilient portion 153 to provide an electrical connection between the heat providing layer 102 of the panel 100 and a corresponding heat providing layer 102' of at least one adjacent panel 201, 202 coupled to the panel 100. Thus, the at least partly resilient portion 153 is arranged to make the heat providing layers 102, 102' of at least two adjacent panels 100, 201, 202 (shown e.g. in figure 6) electrically connectable to each other when the panels 100, 201, 202 are mechanically coupled to each other.

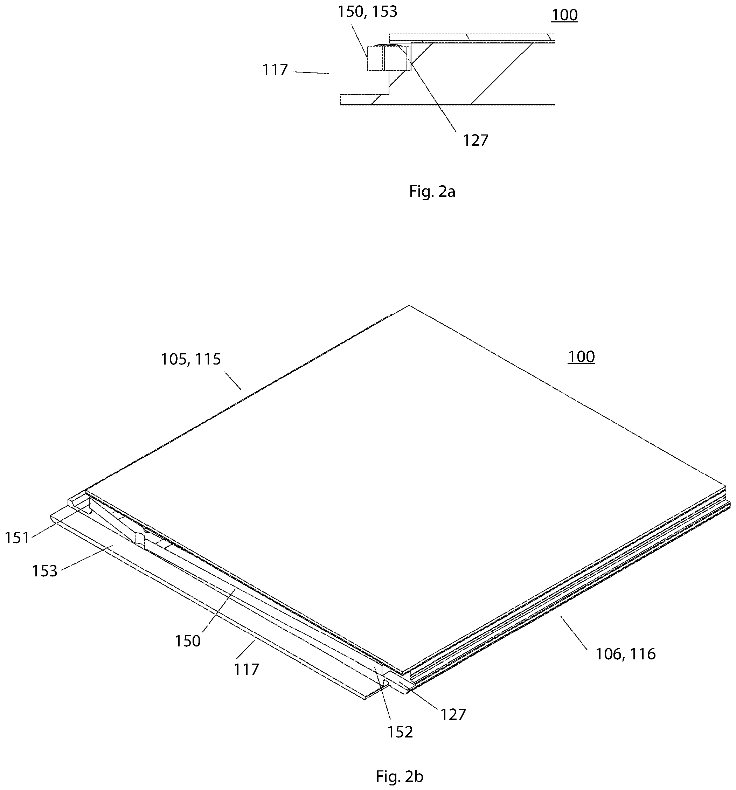

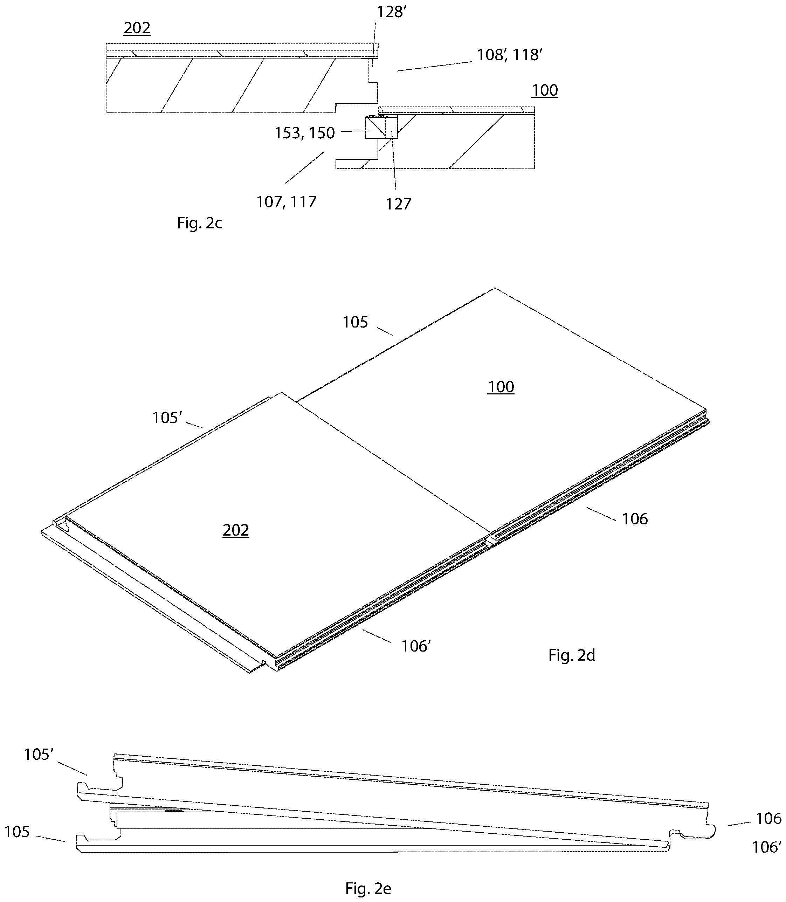

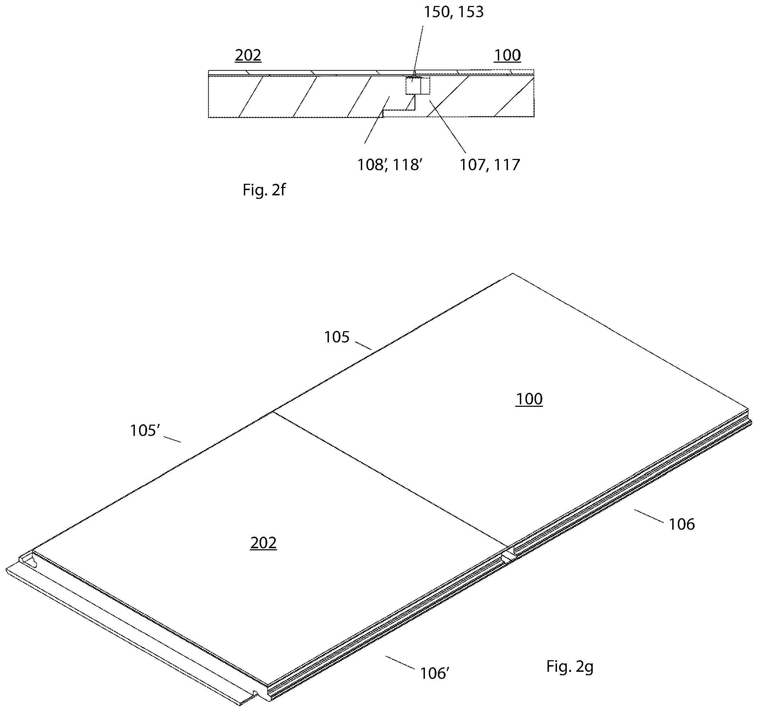

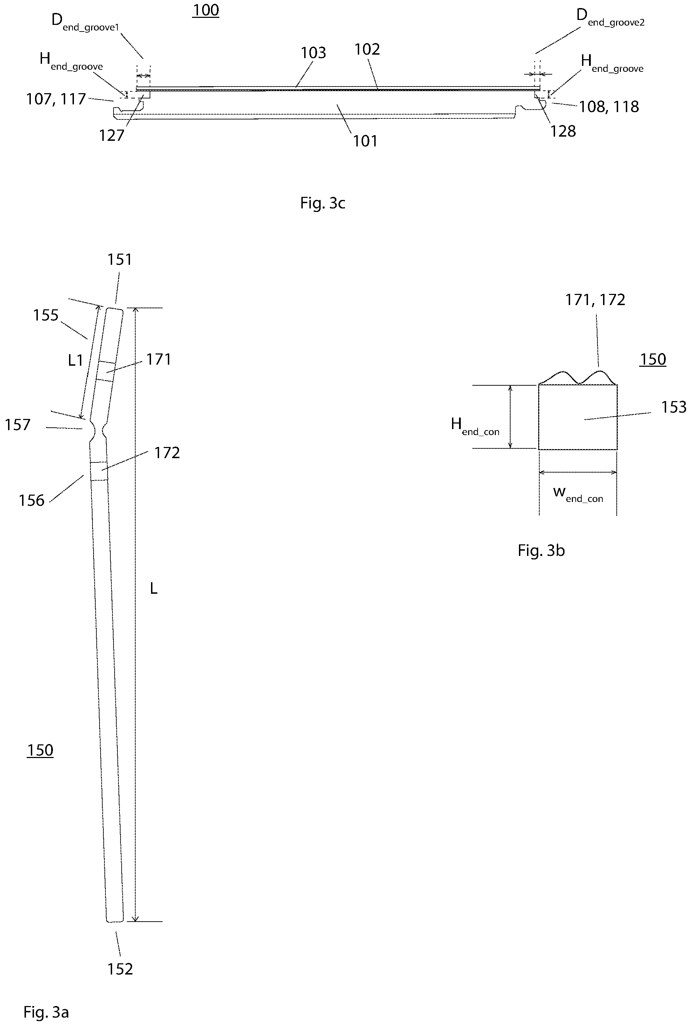

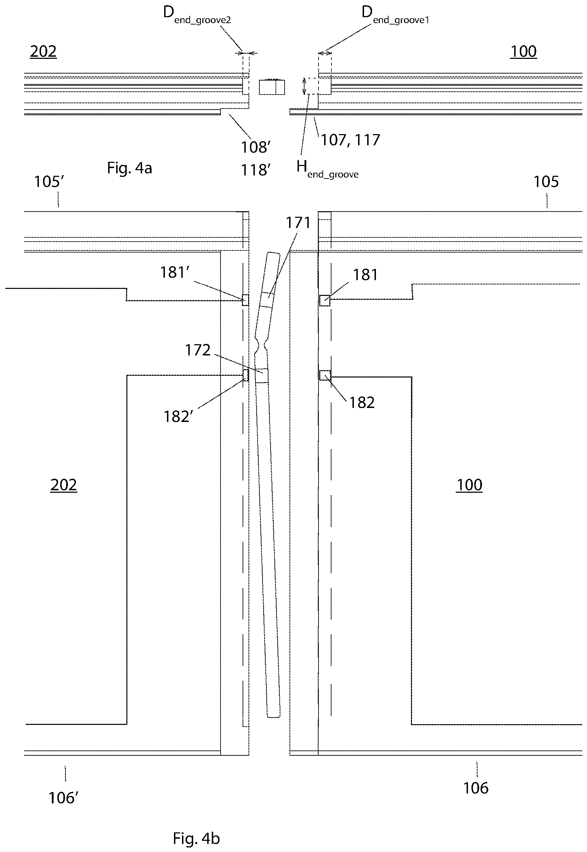

According to embodiments of the present invention, schematically illustrated e.g. in figures 2a, 2c, 2f, 3c and 4a, the first 117 and second 118 end panel coupling means include first 127 and second 128 end panel grooves, respectively. The first 127 and second 128 end panel grooves are at least partly extending between the first 105 and second 106 opposite longitudinal sides and being arranged for at least partly receiving the at least one electrical end connector 150. In other words, the at least one electrical end connector 150 can be arranged in the one or more of the first 127 and second 128 end panel grooves, e.g. being inserted into the one or more of the first 127 and second 128 end panel grooves. The first 127 and second 128 end panel grooves are facing the first 107 and second 108 end sides, respectively, i.e. the opening/aperture of the grooves are directed towards the first 107 and second 108 end sides, respectively. The first 127 and second 128 end panel grooves may further be arranged adjacent to the heat providing layer 102 such that the heat providing layer 102 is partly exposed within or is coupled to the inside of the first 127 and second 128 end panel grooves. In embodiments, an upper wall of first 127 and second 128 end panel grooves may at least partly include/expose a part of the heat providing layer 102, as shown in e.g. figure 3c and 4a. The part of the heat providing layer 102 included in the upper wall of first 127 and second 128 end panel grooves may be partly conductive, e.g. may include first 181 and second 182 electrically conducting parts/sections of the heat providing layer 102 as shown in figure 4b. In embodiments, the first 127 and second 128 end panel grooves may instead at least partly include a coupling to the heat providing layer 102, as is explained in detail below.

When the at least one electrical end connector 150 is arranged in the one or more of the first 127 and second 128 end panel grooves, the at least partly resilient portion 153 of the at least one electrical end connector 150 is arranged to protrude at least partly from the one or more of the first 127 and second 128 end panel grooves in its relaxed state. When the panel 100 is being coupled to an adjacent panel 201, 202, the at least partly resilient portion 153 of the at least one electrical end connector 150 is arranged to be pressed into at least one of the first 127 and second 128 end panel grooves by at least one of first 117' and second 118' end panel coupling means of the adjacent panel 201, 202. Furthermore, the at least partly resilient portion 153 of the at least one electrical end connector 150 is arranged to relax, i.e. to at least partly return towards its relaxed/non-tensioned/normal state/form, into at least one of the first 127' and second 128' end panel grooves of the adjacent panel 201, 202 when the panel 100 is coupled to the adjacent panel 201, 202. In other words, when the panel 100 is coupled to the adjacent panel 201, 202, the at least partly resilient portion 153 of the at least one electrical end connector 150 is arranged to be snapped into at least one of the first 127' and second 128' end panel grooves of the adjacent panel 201, 202, thereby mechanically coupling/locking and electrically coupling the panel 100 to the adjacent panel 201, 202. The mechanically coupling/locking of the panel 100 to the adjacent panel 201, 202 using the electrical end connector 150 will now be further described with reference to figures 2a-g.

Figures 2a-g schematically illustrates the coupling of the panel 100 to the adjacent panel 202 according to an embodiment of the invention. Figures 2a-b illustrates the panel 100 in an initial stage before the panel 100 is coupled to the adjacent panel 202. In the initial stage, the electrical end connector 150 is arranged in the first end panel groove 127 of the first end panel coupling means 117 of the panel 100. The electrical end connector 150 may be fixed, e.g. by being pre-fixed, to the panel 100 by insertion into the first end panel groove 127 of the first end panel coupling means 117 of the panel 100. The electrical end connector 150 is then in its relaxed/non-tensioned/normal/initial state/form, and hence the at least partly resilient portion 153 of the electrical end connector 150 protrudes at least partly from the first end panel groove 127, as shown in figures 2a-b. The panel 100 is thereby ready to be coupled to the adjacent panel 202.

Figures 2c-e illustrates an intermediate stage of the coupling of the panel 100 to the adjacent panel 202, e.g. when the panel 100 has already been mounted on the floor/wall/ceiling and it is time for the adjacent panel 202 to be mounted on the floor/wall/ceiling by coupling it to the panel 100. During the coupling, the adjacent panel 202 is first tilted and then pressed down towards the panel 100 to couple the first end panel coupling means 117 of the panel 100 to the second end coupling means 118' of the adjacent panel 202. In the embodiment shown in figures 2c-e, the adjacent panel 202 is tilted such that the second longitudinal side 106' of the adjacent panel 202 is level with the second longitudinal side 106 of the panel 100, while the first longitudinal side 105' of the adjacent panel 202 is higher than the first longitudinal side 105 of the panel 100. When the first longitudinal side 105' of the adjacent panel 202 is being pressed down towards the first longitudinal side 105 of the panel 100, the at least partly resilient portion 153 of the electrical end connector 150 is pressed into the first end panel groove 127 of the panel 100 by the second end panel coupling means 118' of the adjacent panel 202. The dimensions of the at least partly resilient portion 153 of the electrical end connector 150 and the first end panel groove 127 of the panel 100 may be selected/chosen such that the whole at least partly resilient portion 153 of the electrical end connector 150 can be pressed into the first end panel groove 127 of the panel 100, allowing the adjacent panel 202 to be arranged level and in contact with the panel 100, i.e. aligned with the panel 100. Further details related to the shape and dimensions of the at least partly resilient portion 153 of the electrical end connector 150 and the first 127 and second 128 end panel grooves of the panel 100 will be described below with reference to figures 3a-c.

Figures 2f-g illustrates a final stage of the coupling of the panel 100 to the adjacent panel 202. In figures 2f-g, the coupling is completed and the panel 100 is hence mechanically and electrically coupled to the adjacent panel 202. The adjacent panel 202 has been pressed down such that it is level/aligned with the panel 100 and the first end panel coupling means 117 of the panel 100 has been coupled to the second end coupling means 118' of the adjacent panel 202. Furthermore, the at least partly resilient portion 153 of the electrical end connector 150 has returned at least partly towards its relaxed/non-tensioned/normal/initial state/form by relaxing into the second end panel groove 128' of the adjacent panel 202, as illustrated in figure 2f. In other words, the at least partly resilient portion 153 of the electrical end connector 150 has been snapped into the second end panel groove 128' of the adjacent panel 202, thereby mechanically coupling/locking the panel 100 to the adjacent panel 202 and electrically coupling the panel 100 to the adjacent panel 202.

As described above and below, the at least partly resilient portion 153 of the at least one electrical end connector 150 is at least partly electrically conductive, i.e. includes one or more conductive sections, which provides an electrical connection between the panel 100 and the adjacent panel 202, i.e. between the heat providing layers 102, 102' of the panel 100 and the adjacent panel 202. In embodiments, the at least partly resilient portion 153 of the at least one electrical end connector 150 provides the electrical connection between the heat providing layers 102, 102' of the panel 100 and the adjacent panel 202 using electrically conducting tongues. Thus, the one or more conductive sections then include one or more electrically conductive tongues, respectively. The tongues are in this embodiment arranged to be in electrical contact with the heat providing layers 102, 102' of the panel 100 and of the adjacent panel 202, respectively.

Figures 3a-b illustrates the electrical end connector 150 according to such an embodiment. In figures 3a-b, the at least partly resilient portion 153 of the electrical end connector 150 includes a first 171 and a second 172 electrically conducting tongue. The first 171 and second 172 electrically conducting tongues may be attached to the at least partly resilient portion 153 e.g. by a nail, by soldering and/or by an adhesive. Furthermore, the first 171 and second 172 electrically conducting tongues may be at least partly wave-formed. However, the first 171 and second 172 electrically conducting tongues may have other shapes that promote and/or provide electrical contact between the heat providing layers 102, 102'of the panel 100 and the adjacent panel 202, without deviating from the scope of the invention.

The first 171 and second 172 electrically conducting tongues of the at least partly resilient portion 153 are arranged to be in electrical contact with the heat providing layer 102 of the panel 100 and with a corresponding heat providing layer 102' of the adjacent panel 201, 202 being coupled to the panel 100. When the first 171 and second 172 electrically conducting tongues are wave-formed, the first 171 and second 172 electrically conducting tongues may each comprise a first wave and a second wave, as illustrated in figure 3b. In this case, the first wave of the first 171 and second 172 electrically conducting tongues, respectively, may be in electrical contact with the heat providing layer 102 of the panel 100, while the second wave of the first 171 and second 172 electrically conducting tongues, respectively, may be in electrical contact with the corresponding heat providing layer 102' of the adjacent panel 201, 202 being coupled to the panel 100. By using a wave-form, a pressure can be created between the heat providing layers 102, 102' and the first 171 and second 172 electrically conducting tongues which ensure a solid electrical connection.

According to embodiments of the invention, the heat providing layer 102 of the panel 100 includes first 181 and second 182 electrically conducting parts/sections, while the heat providing layer 102' of the adjacent panel 201, 202 includes corresponding first 181' and second 182' electrically conducting parts/sections, as illustrated in figure 4b. The first 181 and second 182 electrically conducting parts of the heat providing layer 102 may be adjacent to at least one of the first 127 and second 128 end panel grooves. The first 181 and second 182 electrically conducting parts may be located in an upper wall of at least one of the first 127 and second 128 end panel grooves and facing down into the space created by the first 127 and second 128 end panel grooves. In this way, the first 181 and second 182 electrically conducting parts are arranged to be in contact with the electrical end connector 150 when the electrical end connector 150 is arranged in the at least one of the first 127 and second 128 end panel grooves. In embodiments, the first 171 and second 172 electrically conducting tongues of the at least partly resilient portion 153 are arranged to be in electrical contact with the first 181 and second 182 electrically conducting parts, respectively, of the heat providing layer 102 of the panel 100 and with corresponding first 181' and second 182' electrically conducting parts, respectively, of a corresponding heat providing layer 102' of an adjacent panel 201, 202 being coupled to the panel 100.

Figure 3a-b show views of the electrical end connector 150 according to an embodiment where electrically conducting tongues are used to provide the electrical connection. However, according to some embodiments, the electrical connection may instead be provided by the at least partly resilient portion 153 of the at least one electrical end connector 150 being made partly of an electrically conducting material, e.g. including one or more sections of a suitable metal. The at least partly resilient portion 153 may e.g. comprise two parts/sections of an electrically conducting material separated by a non-electrically conducting material. In this case, the electrical connection between the panel 100 and the adjacent panel 201, 202, i.e. between the heat providing layers 102, 102' of the panel 100 and the adjacent panel 201, 202, is provided through the two conductive parts/sections of the at least partly resilient portion 153 of the electrical end connector 150.

Figures 3a-c and 4a-c show the dimensions of the at least partly resilient portion 153 of the electrical end connector 150 and the first 127 and second 128 end panel grooves of the panel 100 according to an embodiment of the invention. The dimensions of the at least partly resilient portion 153 and the first 127 and second 128 end panel grooves may be selected such that a solid electrical connection is achieved between the conductive parts/sections of the at least partly resilient portion 153 of the electrical end connector 150 and the conductive parts/sections of the heat providing layer 102.

The first 127 and second 128 end panel grooves have a height $H_{end\_groove}$ essentially or approximately equal to a height $H_{end\_con}$ of the at least partly resilient portion 153 of the electrical end connector 150; $H_{end\_groove} = H_{end\_con}$ or $H_{end\_groove} \approx H_{end\_con}$. Thus, the at least partly resilient portion 153 of the electrical end connector 150 is movable within the end panel grooves 127, 128 with limited play, e.g. essentially without play, thereby providing a solid mechanical coupling/locking and electrical coupling. Thereby, when the electrical end connector 150 is arranged in at least one of the first 127 and second 128 end panel grooves, the conductive parts/sections of the at least partly resilient portion 153 of the electrical end connector 150 will be in contact with the heat providing layer 102 of the panel 100 exposed to the inside of the first 127 and second 128 end panel grooves. Hence, for the electrical end connector 150 shown in figure 3a-b, the first 171 and second 172 electrically conducting tongues of the at least partly resilient portion 153 of the electrical end connector 150 will press up against the heat providing layer 102 of the panel 100 constituting an upper wall of at least one of the first 127 and second 128 end panel grooves, when the electrical end connector 150 is arranged in at least one of the first 127 and second 128 end panel grooves of the panel 100. The height $H_{end\_con}$ of the at least partly resilient portion 153 may in embodiments vary over the length of the at least partly resilient portion 153. The height $H_{end\_groove}$ of the first 127 and second 128 end panel grooves would in this case correspond the height $H_{end\_con}$ of the at least partly resilient portion 153 at the location of the conductive parts/sections of the at least partly resilient portion 153.

Furthermore, at least one of the first 127 and second 128 end panel grooves may have a first depth $D_{end\_groove1}$ essentially equal to or larger than a width $W_{end\_con}$ of the at least partly resilient portion 153 of the at least one electrical end connector 150; $D_{end\_groove1} \geq W_{end\_con}$; while at least one of the first 127 and second 128 end panel grooves may have a second depth $D_{end\_groove2}$ smaller than the width $W_{end\_con}$ of the at least partly resilient portion 153 of the at least one electrical end connector 150, i.e. $D_{end\_groove2} < W_{end\_con}$. If the width $W_{end\_con}$ of the at least partly resilient portion 153 varies over the length of the at least partly resilient portion 153, the first depth $D_{end\_groove1}$ may be selected based on the maximum width $W_{end\_con}$ of the at least partly resilient portion 153 and the second depth $D_{end\_groove2}$ may be selected based on the maximum width $W_{end\_con}$ and/or the width $W_{end\_con}$ of the at least partly resilient portion 153 at the location of the conductive parts/sections of the at least partly resilient portion 153.

An end panel groove 127, 128 having the first depth $D_{end\_groove1}$ allows the full width $W_{end\_con}$ of the at least partly resilient portion 153 of the electrical end connector 150 to be received in the end panel groove 127, 128. Thereby, during the coupling of the panel 100 to the adjacent panel 201, 202 the at least partly resilient portion 153 of the electrical end connector 150 can be fully pressed into the end panel groove 127, 128 having the first depth $D_{end\_groove1}$. Hence, an end panel groove 127, 128 having the first depth $D_{end\_groove1}$ is suitable to be fitted with the electrical end connector 150 in its relaxed state before coupling the panel 100 to the adjacent panel 201, 202.

On the other hand, an end panel groove 127, 128 having the second depth $D_{end\_groove2}$ can not receive the full width $W_{end\_con}$ of the at least partly resilient portion 153 of the electrical end connector 150. Therefore, at least a portion of the at least partly resilient portion 153 of the electrical end connector 150 will protrude from the end panel groove 127, 128 with the second depth $D_{end\_groove2}$. Hence, an end panel groove 127, 128 having the second depth $D_{end\_groove2}$ is suitable to receive the corresponding at least partly resilient portion 153' of the electrical end connector 150' of the adjacent panel 201, 202 when coupling the panel 100 to the adjacent panel 202, 201.

In the embodiment shown in figure 3c, the first end panel groove 127 has the first depth $D_{end\_groove1}$, which in this embodiment is at least equal to the width $W_{end\_con}$ of the at least partly resilient portion 153 of the electrical end connector 150. Furthermore, the second end panel groove 128 has the second depth $D_{end\_groove2}$, which in this embodiment is essentially or approximately half that of the width $W_{end\_con}$ of the at least partly resilient portion 153 of the electrical end connector 150. The first end panel groove 127 is thereby adapted to receive the electrical end connector 150 in its relaxed state, as shown e.g. in figure 2b. The first end panel groove 127 is further adapted to allow the whole at least partly resilient portion 153 of the electrical end connector 150 to be pressed into the first end panel groove 127 when the panel 100 is being coupled to the adjacent panel 202. The second end panel groove 128 is on the other hand adapted to allow the corresponding at least partly resilient portion 153' of the electrical end connector 150' of the adjacent panel 201 to be snapped into it when the panel 100 is being coupled to the adjacent panel 201. When the at least partly resilient portion 153' of the electrical end connector 150' of the adjacent panel 201 has been snapped into the second end panel groove 128, the second end panel groove 128 has received essentially or approximately half the width $W_{end\_con}$ of the at least partly resilient portion 153' of the electrical end connector 150', while essentially or approximately half the width $W_{end\_con}$ of the at least partly resilient portion 153' of the electrical end connector 150' remains in the corresponding first end panel groove 127' of the adjacent panel 201. Thereby, the at least partly resilient portion 153' of the electrical end connector 150' is simultaneously connected to the heat providing layer 102 of the panel 100 and the heat providing layer 102' of the adjacent panel 201.

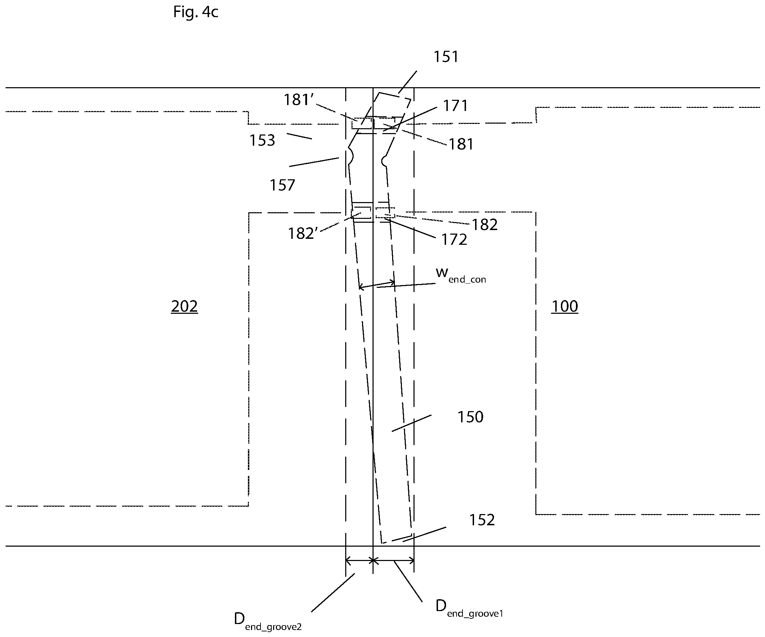

Figure 4c shows the position of the electrical end connector 150 when the panel 100 has been coupled to the adjacent panel 202. In the embodiment shown in figure 4c, the first end panel groove 127 of the panel 100 has the first depth $D_{end\_groove1}$, which in this embodiment is approximately equal to the width $W_{end\_con}$ of the at least partly resilient portion 153 of the electrical end connector 150. Furthermore, the second end panel groove 128' of the adjacent panel 202 has the second depth $D_{end\_groove2}$, which in this embodiment is approximately half the width $W_{end\_con}$ of the at least partly resilient portion 153 of the electrical end connector 150. As shown in figure 4c, when the at least partly resilient portion 153 of the electrical end connector 150 of the panel 100 has been snapped into the second end panel groove 128' of the adjacent panel 202, approximately half the width $W_{end\_con}$ of the at least partly resilient portion 153 of the electrical end connector 150 is in the second end panel groove 128', while approximately half the width $W_{end\_con}$ of the at least partly resilient portion 153 of the electrical end connector 150 is in the first end panel groove 127 of the panel 100. Thereby, the first 171 and second 172 electrically conducting tongues of the at least partly resilient portion 153 of the electrical end connector 150 are simultaneously connected to the first 181 and second 182 electrically conducting parts of the heat providing layer 102 of the panel 100 and the first 181' and second 182' electrically conducting parts of the heat providing layer 102' of the adjacent panel 202. Thereby, providing an electrical connection between the heat providing layer 102 of the panel 100 and the heat providing layer 102' of the adjacent panel 202.

Figure 3a shows the electrical end connector 150 according to an embodiment of the invention. In the embodiment shown in figure 3a, the at least partly resilient portion 153 of the electrical end connector 150 includes a first 155 and a second 156 portions being resiliently connected to each other. The first 155 and second 156 portions of the at least partly resilient portion 153 may be resiliently connected to each other by means of at least one in the group of a spring joint, and a resilient member. Alternatively or in addition, at least one of the first 155 and second 156 portions of the at least partly resilient portion 153 may include a resilient material such that the at least one of the first 155 and second 156 portions are in itself resilient/flexible.

In embodiments where the at least partly resilient portion 153 of the electrical end connector 150 includes the first 155 and second 156 portions, the first 155 and second 156 portions of the at least partly resilient portion 153 may include first 171 and second 172 electrically conducting tongues, respectively, as shown in figure 3a.

In embodiments, the at least partly resilient portion 153 of the electrical end connector 150 may instead be a single part (not shown). In this case, the at least partly resilient portion 153 of the at least one electrical end connector 150 may include a resilient material, i.e. the at least partly resilient portion 153 of the electrical end connector 150 is in itself resilient/flexible.

It is the resilience of the at least partly resilient portion 153 of the electrical end connector 150 that allows the electrical end connector 150 to be used to mechanically couple/lock the panel 100 to the adjacent panel 201, 202, as well as provide the electrical connection between the panel 100 and the adjacent panel 201, 202. The shape and resilience of the at least partly resilient portion 153 of the electrical end connector 150 may be selected such that a smooth mechanical coupling/locking is achieved. For example, by arranging the at least partly resilient portion 153 towards one of the ends of the electrical end connector 150, the force required to press down the adjacent panel 201, 202 towards that end during the coupling to the panel 100 can be reduced. Thereby, the risk of breaking the electrical end connector 150, the panel 100, and/or the adjacent panel 201, 202 during the coupling is reduced. Hence, in embodiments the at least partly resilient portion 153 of the at least one electrical end connector 150 is arranged to be located closer to the first end portion 151 than to the second end portion 152, or vice versa. Figure 3a shows an embodiment where the at least partly resilient portion 153 of the electrical end connector 150 is located closer to the first end portion 151 than to the second end portion 152. In figure 3a, the electrical end connector has a length L and a most protruding part 157 of the at least partly resilient portion 153 of the electrical end connector 150 is arranged to be located a first length L1 from the first end portion 151. The length L1 of the non-limiting example in figure 3a is approximately 20% of the length L, i.e. the ratio between the first length L1 and the length L is approximately 0.2; L1/L ≈ 0.2.

In embodiments, the most protruding part 157 of the at least partly resilient portion 153 of the electrical end connector 150 may instead be located closer to or further away from the first end portion 151. Hence, the length L of the electrical end connector 150 and the first length L1 between the most protruding part 157 and the first end portion 151 may be selected such that the ratio between the first length L1 and the length L is at least one interval in the group (or an interval based on the limiting values in the group) of:

$$0.5 \leq L1/L \leq 0.15,$$

$$0.4 < L1/L < 0.2,$$

$$L1/L = 0.3.$$

The location of the most protruding part 157 of the at least partly resilient portion 153 of the electrical end connector 150 along the electrical end connector 150 may be selected based on factors such as e.g. the strength of at least one of the first 117 and second 118 end panel coupling means, a desired strength of the mechanical coupling/locking etc. For example, if the first 117 and second 118 end panel coupling means are made of a strong material, e.g. solid wood, the most protruding part 157 of the at least partly resilient portion 153 of the electrical end connector 150 may be located in the middle or close to the middle of the electrical end connector 150. Thereby, the electrical end connector 150 can provide a strong mechanical coupling/locking. On the other hand, if the first 117 and second 118 end panel coupling means are made of a less strong material, e.g. wood fiber board, the most protruding part 157 of the at least partly resilient portion 153 of the electrical end connector 150 may be located closer to one end of the electrical end connector 150, e.g. 150-250 of the length L from the end of the electrical end connector 150. Thereby, reducing the force required for the mechanical coupling/locking and hence the risk of breaking the first 117 and second 118 end panel coupling means and/or the electrical end connector 150 during the mechanical coupling/locking.

Furthermore, the shape and resilience of the at least partly resilient portion 153 of the electrical end connector 150 may be selected such that in its relaxed state the at least partly resilient portion 153 is arranged to protrude at least partly more than its width, i.e. more than the width $W_{end\_con}$ of the at least partly resilient portion 153 of the electrical end connector 150, as shown e.g. in figure 2b. In the embodiment shown in figure 2b, the at least partly resilient portion 153 of the at least partly resilient portion 153 protrudes more than the width $W_{end\_con}$ of the at least partly resilient portion 153 at the most protruding part 157 of the at least partly resilient portion 153. The at least partly resilient portion 153 of the at least partly resilient portion 153 may e.g. protrude between 1 and 2 times the width $W_{end\_con}$ of the at least partly resilient portion 153. This ensures a strong enough spring force such that the electrical end connector 150 can be used to mechanically couple the panel 100 to the adjacent panel 201, 202.

Figures 5a-b illustrate an embodiment of the present invention, in which the panel 100 includes at least one sandwich/insulating core 160 included in the base layer 101. The at least one sandwich/insulating core 160 may have heat insulating properties, preventing that created heat is transported in the wrong direction, i.e. away from the space to be heated. For example, a temperature increase of e.g. 3 °C for a panel without insulation could result in a temperature increase of e.g. 5-6 °C for the same panel with at least one sandwich/insulating core 160 added to the base layer 101. The at least one sandwich/insulating core 160 may also have sound/noise absorbing properties, which then efficiently reduces the noise of e.g. high heels being walked across the floor.

The sandwich/insulating core 160 may e.g. include polyurethane, for example in form of a polyurethane foam being injected at and/or after assembly of the layers of the panel 100.

Figures 5c-e illustrate some embodiments of the present invention, in which the panel 100 includes at least one sandwich/insulating core 160 included in the base layer 101. The at least one sandwich/insulating core 160 may here e.g. include pyramid formed support elements E that may, by the side surfaces A, B of the pyramid forms, provide supportive force/pressure from the pyramid formed support elements E on the corresponding pyramid formed parts D of the base layer 101 of the panel 100, such that they may carry heavier loads. The pyramid formed support elements E may have their base side facing away from the covering layer 103, and the pointed side towards the covering layer 103. As mentioned above, the at least one sandwich/insulating core 160 may have heat and/or sound/noise insulating properties. Thus, the pyramid shaped support elements provide optimal insulation in combination with an optimal carrying capacity for the panel 100.

Figure 5e illustrate an embodiment, for which load/weight carrying element 170 are arranged between the sandwich/insulating core pyramid forms 160 in the base layer 101 material, which may be e.g. wood or some other material suitable for carrying weight. The load carrying element 170 may for example have a circular form, e.g. may be essentially screw/bolt-formed with a wider circular head part and a thinner circular pointed part, with the wider part directed towards the covering layer 103. The load carrying element 170 may be of essentially any load carrying material, such as e.g. metal or plastic. The circular head part of the load carrying element 170 is arranged for carrying weight/load originating from the covering layer 103, such that the bottom regions of the pyramid formed parts D of the base layer 101 may be less strong, i.e. do not have to be strong enough to itself take up the whole carrying weight/load. Thus, the weight/load originating from the covering layer is here at least partly carried by the load carrying elements 170.

The load carrying elements 170 may be casted/moulded together with base layer 101 material in order to improve the load carrying capabilities of the panel 100, i.e. to improve the load/weight carrying capabilities of the base layer 101 material. Hereby, a less stable and more porous material may be used for the rest of the base layer 101 material, which lowers the production costs.

According to an aspect of the present invention, an electrical end connector 150 is presented. The electrical end connector 150 and its embodiments are described in this document, and is illustrated e.g. in figures 1 and 3a-b. The electrical end connector 150 is insertable into one or more of the first 117 and second 118 end panel coupling means of the herein described panel 100, according to the herein described embodiments.

As previously described and shown in e.g. figure 3a, the electrical end connector 150 includes the first 151 and second 152 end portions and the at least partly resilient portion 153 located between the first 151 and second 152 end portions. The at least partly resilient portion 153 being at least partly electrically conductive and at least partly protruding from the one or more of the first 117 and second 118 end panel coupling means when being inserted into one or more of the first 117 and second 118 end panel coupling means. The electrical end connector 150 thereby provides an electrical connection between the heat providing layer 102 of the panel 100 and a corresponding heat providing layer 102' of at least one adjacent panel 201, 202 coupled to the panel 100. According to an embodiment, the at least partly resilient portion 153 of the electrical end connector 150 may be arched, or may be arranged like a triangle with an angle between the first 155 and second 156 portions, such that the at least partly resilient portion 153 protrude between 1 and 2 times the width $W_{end\_con}$ of the at least partly resilient portion 153 from the bottom/base of the arch/triangle to the top of the arch/triangle. This ensures a strong spring force and a solid mechanical and electrical coupling of the panel 100 to an adjacent panel 201, 202.

As described above with reference to figures 2a-g, when the panel 100 and the adjacent panel 202 are mechanically coupled together, the at least partly resilient portion 153 of the electrical end connector 150 is, according to various embodiments, inserted/received in the end panel grooves 127, 128' of the panel 100 and the adjacent panel 202, whereby the at least partly resilient portion 153 provides the electrical connection between the heat providing layers 102, 102' of the panel 100 and of the adjacent panel 202.

According to embodiments, the electrical end connector 150 also provides a mechanical coupling to at least one adjacent panel 201, 202, e.g. by snap locking.

As mentioned above, and also being illustrated e.g. in figures 3a-b, the at least partly resilient portion 153 of the at least one electrical end connector 150 may, according to an embodiment, include first 171 and second 172 electrically conducting tongues, respectively. The first 171 and second 172 electrically conducting tongues are arranged for being in electrical contact with the heat providing layer 102 of the panel 100 and with a corresponding heat providing layer 102' of an adjacent panel 201, 202, when the panel 100 is coupled to the adjacent panel 201, 202.

According to an embodiment, the first 171 and second 172 electrically conducting tongues have a form being suitable for creating a solid electrical contact with the heat providing layers 102, 102'. The first 171 and second 172 electrically conducting tongues may e.g. be at least partly wave-formed, with the peaks of the wave form pointing towards the heat providing layers 102, 102'.

The electric energy being conveyed to the heat providing layer 102, 102' by the at least partly resilient portion 153 may have a voltage in the interval of 5 Volts - 60 Volts, or in the interval of 10 Volts - 55 Volts, or in the interval of 15 Volts - 50 Volts, or in the interval of 25 Volts - 50 Volts. The panel 100 according to the present invention may be supplied with such low voltages since the electrical contact between adjacent panels, and possibly also the heat providing layers, and therefore of the panel 100 itself, are very good, i.e. have low losses.

According to an example embodiment of the present invention, the electric energy being supplied to the heat providing layer 102 in order to create the heat has a voltage V of 25 Volts; V = 25 volt, which in many regions and/or countries may be handled by a layman, i.e. by a non-electrician.

According to another example embodiment of the present invention, the electric energy has a voltage V of 50 Volts; V = 50 volt, which in some regions and/or countries may be handled by a layman.

As described above, at least first 121 and second 122 longitudinal grooves may be arranged in the base layer 101 of the panel 100, as shown in figure 1 and figure 5b. The first 121 and second 122 longitudinal grooves may extend from the first end side 107 to the second end side 108 and face the heat providing layer 102. Furthermore, the at least first 121 and second 122 longitudinal grooves may be arranged in parallel with, and have at least a first 131 and a second 132 distances to, the first 105 and second 106 longitudinal sides, respectively. The panel 100 may, according to some embodiments of the present invention, include further longitudinal grooves, i.e. may in total include more than two longitudinal grooves.

The at least first 121 and second 122 longitudinal grooves may in embodiments be used to provide electrical connection between the panel 100 and an electrical energy providing arrangement 810. In such embodiments, the panel 100 further comprises at least first 161 and second 162 electrical power supply end connectors arranged in the at least first 121 and second 122 longitudinal grooves, respectively, at the first end side 107 or the second end side 108, the at least first 161 and second 162 electrical power supply end connectors being arranged to provide an electrical connection between the heat providing layer 102 of the panel 100 and an electrical energy providing arrangement 810. The electrical energy providing arrangement 810 may be part of a heating system 800, as will now be described with reference to figure 7-10.

According to an aspect of the present invention, a heating system 800 is presented. The heating system 800, is schematically illustrated in figure 7, and includes at least one panel 100, 203 as described above. The heating system further includes an electrical energy providing arrangement 810, arranged e.g. at a mounting base 820 and/or facing the base layer 101 adjacent to at least one of the first 107 and the second 108 end sides of the at least one panel 100, 203. The electrical energy providing arrangement 810 supplies the electric energy to at least one first 161 and at least one second 162 electrical power supply end connectors of the panel 100. In figure 7, only two panels 100, 203 are shown for simplicity. As is clear for a skilled person, many more panels may be included in the heating system 800. Also, each one of the panels 100, 203 in figure 7 may represent a row of panels. It should be noted that the electrical energy providing arrangement 810 described in this document may be used for supplying electrical energy to essentially any electrically heated panel, i.e. not only to the herein described panel 100.

According to the embodiment shown in figure 7, the electrical energy is provided by first and second polarities P1, P2 being supplied to the first 161 and second 162 electrical power supply end connectors of the first end side 107 of the panel 100, or to a corresponding first end side 107' of an adjacent panel 202 coupled directly or indirectly to the first end side 107 of the panel 100. Thus, both the first and second polarities P1, P2 are connected to a first end side 107 of a first panel 100, 203 in each row of panels being coupled together at their end sides 107, 108. The first and second polarities P1, P2 are then electrically connected to further panels in each row of panels, laid as illustrated in figure 6, such that all panels of the whole floor/wall/ceiling are electrified. Hereby, the whole area covered by the panels is heated. Since the voltage used in figure 7 is rather low, e.g. 25 Volts, both of the first and second polarities P1, P2 may be supplied to the same end side 107 of the panel. This is possible since the risk for a dangerous electric shock of a person installing the panels is essentially non-existing at these low voltages.

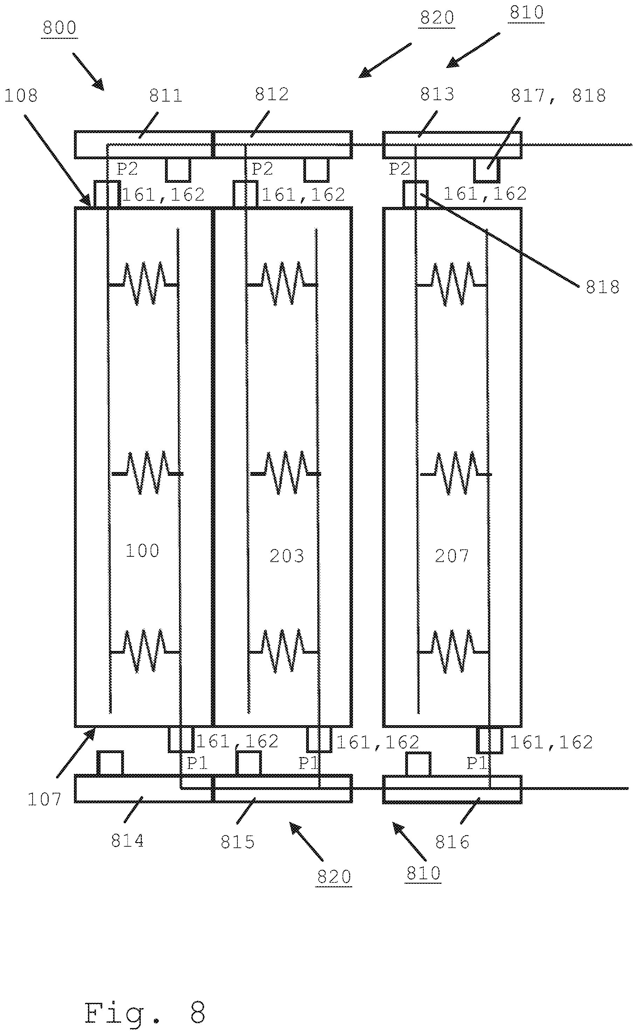

According to another embodiment of the present invention, the electric energy has a voltage of 50 Volts; V = 50 Volts; which in some regions and/or countries may be handled by a layman, i.e. by a non-electrician. A heating system 800 is schematically illustrated in figure 8, which includes at least one panel 100, 203, 207 as described above. The heating system further includes an electrical energy providing arrangement 810, arranged e.g. at a mounting base 820 and/or facing the base layer 101, on two opposite sides of a floor, wall or ceiling, and adjacent to at both the first 107 and the second 108 end sides of the at least one panel 100, 203, 207. It should be noted that the electrical energy providing arrangement 810 described in this document may be used for supplying electrical energy to essentially any electrically heated panel, i.e. not only to the herein described panel 100.

The electrical energy providing arrangement 810 may include contact means 811, 812, 813, 814, 815, 816, each one being arranged for providing one polarity P1, P2 to the panel 100, 203, 207 by use of a contact protrusion 817 and/or first 161 and second 162 electrical power supply end connectors. The contact means 811, 812, 813, 814, 815, 816 and/or the panels 100, 203, 207 may also include a stability protrusion 818.

When the contact means 811, 812, 813, 814, 815, 816 are assembled with, i.e. are inserted into, the panels 100, 203, 207, the electrical energy is provided to the panels 100, 203, 207 by the contact protrusions 818, and the panels 100, 203, 207 are held in place by the stability protrusions 817. Also, the electrical energy, i.e. the voltage creating the heat in the panels 100, 203, 207, is encapsulated within the panels 100, 203, 207 by the contact means 811, 812, 813, 814, 815, 816. The risk for getting an electric shock is therefore minimized for the heating system 800 illustrated in figure 8, partly due to the encapsulated electrical energy, and partly because the two polarities P1, P2 are provided to opposite sides of a floor, wall or ceiling being covered by the panels, and are therefore difficult, often impossible, for a person to come in physical contact with both of P1 and P2 at the same time.

Also, the voltage drop over the heat providing layer 102 is approximately reduced by 50 % when the two polarities P1, P2 are provided to opposite sides of a floor.

According to an embodiment of the present invention, schematically illustrated in figure 8, the electrical energy is thus provided to the panel 100 by the first polarity P1 being supplied to the first 161 or second 162 electrical power supply end connectors of the first end side 107 of a panel 100. The second polarity P2 is then supplied to the first 161 or second 162 electrical power supply end connectors of the second end side 108 of the panel. Thus, the first polarity P1 is supplied to one end side 107 of the panel 100, and the second polarity P2 is supplied to the opposite end side 108 of the panel 100.

Also, the second polarity P2 may be supplied to the first 161 or second 162 electrical power supply end connectors of a corresponding first end side 107' of an adjacent panel 202 coupled directly or indirectly to the first end side 107 of the panel 100, as illustrated in figure 6. Also, the second polarity P2 may be supplied to the first 161 or second 162 electrical power supply end connectors of a corresponding second end side 108' of an adjacent panel 201 coupled directly or indirectly to the second end side 108 of the panel 100.

The electrical energy providing arrangement 810 thus supplies the electric energy to the first 161 and second 162 electrical power supply end connectors on two opposite end sides of the at least one panel 100, 203, 207. In figure 8, only three panels 100, 203, 207 are shown for simplicity. As is clear for a skilled person, however, many more panels may be included in the heating system 800. Also, each one of the panels 100, 203, 207 in figure 8 may represent a row of panels.

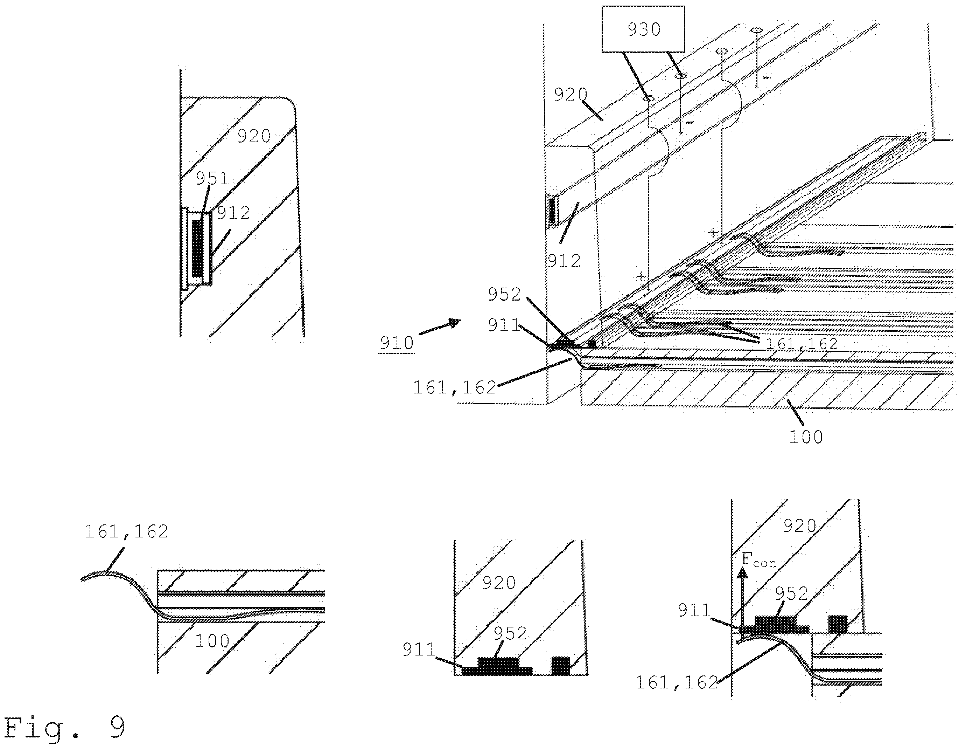

Figure 9 schematically illustrates a complete heating system. As illustrated in figure 9, and mentioned above, first 161 and second 162 electrical power supply end connectors, may be used on one end side 108 of the panel, if this end side is the end side starting a row of panels, i.e. is the end side facing a wall, socket or the like from which the electrical power is provided to the row of panels. These first 161 and second 162 electrical power supply end connectors may be essentially any kind of connector/terminal creating a solid electrical connection, such as e.g. a connector being at least partly resilient and slightly tilted vertically, for example in an upward direction, as illustrated in figure 9, providing a connection force between the first 161 and second 162 electrical power supply end connectors and a contact means 911 of an electrical energy providing arrangement 910 including e.g. a mounting base 920 arranged for example along at least one wall on at least one side of a floor, wall or ceiling, and adjacent to the end side of the at least one panel 100.

The at least one first contact means 911 may here e.g. be arranged as an electrically conducting contact strip, possibly in metal, being arranged horizontally in the electrical energy providing arrangement 910, such that it provides for a contact surface for the slightly upwardly tilted first 161 and second 162 electrical power supply end connectors. Thus, a vertical contact force $F_{con}$ is created when the at least one panel 100 and the electrical energy providing arrangement 910, e.g. in the form of a mounting base, are mounted together.

Also, the electrical energy providing arrangement 910, e.g. included in the mounting base 920 described in this document may, as mentioned above, be used for supplying electrical energy to essentially any electrically heated panel, i.e. not only to the herein described panel 100, and/or to any other electrical energy consuming device 930, such as e.g. a wall or ceiling heating panel, a lamp or the like. The electrical energy providing arrangement 910 may for this reason include at least one second contact means 912.

According to an embodiment, the at least one first contact means 911 may be provided with first polarity P1, and the at least one second contact means 912 may be provided with another second polarity P2.

Hereby, the electrical energy providing arrangement 910 may supply electrical energy to essentially any electrical device 930 driven by the voltage provided by the electrical energy providing arrangement 910. For example, many kinds of lamps are driven by lower voltages, such as e.g. 25 Volt or 50 Volt, and may therefore be directly supplied with this voltage from the electrical energy providing arrangement 910.

Also, the at least one first 911 and the at least one second 912 contact means of adjacent parts of the energy providing arrangement 910, e.g. in the form of adjacent mounting base parts mounted together, may be electrically coupled by means of coupling means 951, 952, e.g. in form of sheet metal, that may possibly correspond in form and/or function to the herein described first 161 and second 162 electrical power supply end connectors.

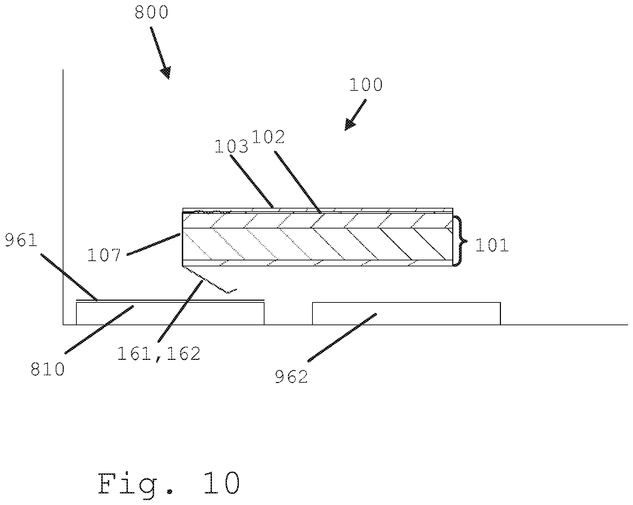

In figure 10, a heating system according to an embodiment is illustrated. The electrical energy providing arrangement 810 is here located underneath the panel 100, i.e. facing the base layer 101 of the panel. The at least one first 161 and at least one second 162 electrical power supply end connectors are then bent around at least one of the first 107, 107' and the second 108, 108' end sides of the panel, and are arranged between the base layer 101 of the panel 100 and the electrical energy providing arrangement 810. Hereby, the at least one first 161 and at least one second 162 electrical power supply end connectors are pressed against, and are thus in electrical contact with, at least one part of the electrical energy providing arrangement 810. The electrical energy providing arrangement 810 may, according to an embodiment, include at least one adhesive tape comprising an electrically conducting element 961 facing the base layer 101 of the panel 100. The adhesive tape may for example be pasted/arranged on a floor adjacent to a wall, and thus also adjacent to a panel end side 107, in order to create contact with the at least one first 161 and at least one second 162 electrical power supply end connectors. On the rest of the floor, i.e. underneath the rest of the panels, a stepping layer 962, being e.g. a thin foam and/or paper layer, may cover the floor.

According to an embodiment of the present invention, a method for installing the heating system 800 is presented When panels according to the present invention are to be assembled/laid to become e.g. a floor, the electrical energy providing arrangement 810, 910 described above may first be arranged/mounted at a mounting base 820, 920 and/or facing the base layer 101 on one or two sides of the room to be floored. For example, a lower voltage energy providing arrangement, providing e.g. 25 Volts may be arranged/mounted along one wall of a room and then provides both polarities P1, P2 of the voltage. A higher voltage energy providing arrangement, providing e.g. 50 Volts, may instead be arranged along two opposite sides of a room and then provides one polarity of the voltage from each opposite side of the room. Thus, the electrical energy is then available at one or two sides of the room.

A first panel 100 is then mechanically coupled to at least one second panel 201, 202 by use of the electrical end connector 150 of the panel 100, the first end panel coupling means 117 of the panel 100, and the second end panel coupling means 118' of the at least second panel 201, 202. Hereby, a row of two or more panels 100, 201, 202 is created. The last second panel 202 in such a row of panels may have to be cut such that the length of the row corresponds to the length of the room.

At the same time as the panels of the row are mechanically coupled, an electrical connection of the first panel 100 and the at least one second panel 201, 202 is achieved by the at least one electrical end connector 150 of the first panel 100. Thus, as the panels 100, 201, 202 are pressed together by the mechanical coupling means 117, 118, also the at least partly resilient portion 153 of the at least one electrical end connector 150, of the panels 100, 201, 202 of the row are pressed into the first 127, 127' and second 128, 128' end panel grooves of the panels 100, 201, 202, thereby causing an electrical connection of the heat providing layers 102, 102' of the panels 100, 201, 202.

Then, the row of the first panel 100 and the at least one second panel 201, 202 is supplied with electrical energy from the electrical energy providing arrangement 810, 910. According to an embodiment described above, which is useful e.g. for lower voltages, this is done by connecting both of the first 161 and second 162 electrical power supply end connectors of the first panel 100 to the electrical energy providing arrangement 810, 910, which then supplies both of the voltage polarities P1, P2 to the first end side 107 of the first panel 100.

According to another embodiment described above, which is useful e.g. for higher voltages, the row of the first panel 100 and the at least one second panel 201, 202 is supplied with electrical energy from the electrical energy providing arrangement 810, 910 by connecting one of the first 161 and second 162 electrical power supply end connectors on the first end side 107 of the first panel 100 to the electrical energy providing arrangement 810, 910. The electrical energy providing arrangement 810, 910 then provides the first side 107 of the first panel 100 of the row of panels with one polarity P1 of the electrical energy. Then, another one of the first 161 and second 162 electrical power supply end connectors on the second end side 108' of the row, i.e. on the second side 108' of the at least one second panel 201, 202 is connected to the electrical energy providing arrangement 810, 910. The electrical energy providing arrangement 810, 910 then provides the second side 108' of the row with another polarity P2 of the electrical energy.

As mentioned above, to supply the row of panels 100, 201, 202 with one voltage polarity at each end of the row has an advantage in that the risk for a person laying the floor getting an electric shock by the electric energy being provided to the panels is considerably reduced. In order to get an electric shock, i.e. in order to come in contact with both polarities of the voltage, the person would have to reach across the entire room, along the whole length of the row of panels, which is not very likely. Thus, a higher voltage supply may be used with this embodiment of the invention.

In the following, some non-limiting examples descriptions of electrical properties and heating properties of a floor according to some of the herein described embodiments are presented.

A power consumption for the floor, P, is given as:

$$P = U * I; \qquad (eq. 1)$$

where U is the voltage applied on the heat providing layer, and I is the corresponding applied electrical current. The applied voltage U is given by the voltage $U_{supply}$ provided by the power source minus a voltage drop $\Delta U$ between the power source and the heat providing layer, i.e.:

$$U = U_{supply} - \Delta U. \qquad (eq. 2)$$

The current I flowing through the heat providing layer is given by ohm's law:

$$U = R * I; \ i.\ e. \qquad (eq. 3)$$

$$I = U / R; \qquad (eq. 4)$$

where R is the resistance of the heat providing layer. The heat providing layer may be divided in heating modules/sections, where a multiple of modules/sections may be coupled in parallel. For one heat module/section the resistance is given by:

$$R = resistivity * L_{c\_heat} / A_{c\_heat}; \qquad (eq. 5)$$

where the resistivity is a material parameter, e.g. for pure aluminum approximately $2.82 \times 10^{-8}$ ohm m, $L_{c\_heat}$ is the length of the heating conductor (resistor), and $A_{c\_heat}$ is the cross section area of the heating conductor. The cross section area of the conductor $A_{c\_heat}$ is e.g. for a thin film given as:

$$A_{c\_heat} = h_{c\_heat} * w_{c\_heat}; \qquad (eq. 6)$$

where $h_{c\_heat}$ is the height/thickness of the conductor (resistor), and w is the width of the conductor (resistor).

For example, for a heating module with a heating conductor length $L_{c\_heat}$ of 62.5 m, a width of the heating conductor $w_{c\_heat}$ of 0,642 mm, and a heating conductor film thickness of 9 micrometer, the resistance R is approximately 305 ohm for aluminum.

By combining equations 1 and 4 above, the power is given by:

$$P = U^2 / R; \qquad (eq. 7)$$

i.e. the power increases with the square of the voltage, U, and is decreased with the inverse of the resistance R.

The power P may be written as:

$$P = (U^2 * w_{c\_heat} * h_{c\_heat}) / (L_{c\_heat} \times resistivity). \qquad (eq. 8)$$

Because the resistivity is a material parameter, and the conducting heat film thickness is a physical parameter to be chosen, the power may be written as:

$$P = U^2 * (w_{c\_heat} / L_{c\_heat}) * constant). \qquad (eq. 9)$$

This means that for a chosen type of heat film, the wanted power P is most easily controlled by the voltage, and then by the length $L_{c\_heat}$ and width $w_{c\_heat}$ of the heating conductor (resistor).

Since all electrical power P is converted to Joule heat Q, $P_{heat} = dQ/dt$, $P_{heat}$ is equal to P. The time derivative of Joule heat Q, dQ/dt, which corresponds to a flow of thermal energy. The heat flow, dQ/dt, will flow in the negative direction of the temperature gradient.

The power supplied P will be transformed into heat flow, dQ/dt, which will flow downwards $dQ/dt_{down}$ to the under lay structure by conduction $dQ/dt_{cond}$, and upwards, $dQ/dt_{up}$, by convection $dQ/dt_{conv}$ and radiation, $dQ/dt_{rad}$, and for non-equilibrium to the rise of the temperature of the board/panel, $dQ/dt_{board}$.

$$dQ/dt = dQ/dt_{cond} + dQ/dt_{conv} + dQ/dt_{rad} + dQ/dt_{board} \qquad (eq. 10)$$

For equilibrium:

$$dQ/dt = dQ/dt_{cond} + dQ/dt_{conv} + dQ/dt_{rad} \qquad (eq. 11)$$

$$dQ/dt_{down} = dQ/dt_{cond} \qquad (eq. 12)$$

$$dQ/dt_{up} = dQ/dt_{conv} + dQ/dt_{rad} \qquad (eq. 13)$$

For non-equilibrium the temperature of the board will be rised by $dQ/dt_{board}$.

Regarding the temporal behavior, the temperature derivative with regard to time of the board/panel is:

$$dT/dt = dQ/dt_{board} / (d * density * Cp); \qquad (eq. 14)$$

where dT/dt is hence proportional to $dQ/dt_{board}$, and obviously, the temperature will rise if $dQ/dt_{board}$ is not zero.

If the board is well insulated from the underlay structure, $dQ/dt_{cond}$ will be small, and hence the temperature gradient in the board/panel will be small, therefore the temperature will approximately follow a first order differential equation. The time dependence of the board/panel will then be:

$$T_{board} = T_{inital} + (T_{end} - T_{inital}) * (1 - e^{-t/tau}); \qquad (eq. 15)$$

where $T_{inital}$ is the temperature of the board/panel before the voltage V is applied, $T_{end}$ is the final temperature, and tau is the characteristic time constant.

$$T_{end} = P * R_{th\_tot}; \qquad (eq. 16)$$

and for tau per area unit:

$$tau = c_P * density * d; \qquad (eq. 17)$$

where $c_P$ is the specific heat capacity, $R_{th\_tot}$ is the total thermal resistance, density is the density of the board/panel, and d is the thickness of the board.

Regarding the heat flow dQ/dt and temperature rise of the board/panel, the temperature rise on the surface of the board/panel will be dependent on the power P, the ambient temperature $T_{amb}$, the thermal resistance downwards, $R_{th\ down}$ (between the heat film and the ambient floor), the thermal resistance between the film and the ambient air $R_{th\_up}$. Each layer of the board/panel has its own thermal resistance, i.e. for the board/panel substructure $R_{th\_sub}$, any dampening layer under the board $R_{th\_damp}$, the heating film substrate $R_{th\_substrate}$, the covering layer, $R_{th\_top}$, and for the interface between the covering layer and the ambient air, $R_{th\_conv}$. The thermal resistances downwards add in series, and the thermal resistances upwards add also in a series. However, the total thermal resistance downwards and the total thermal resistance upwards is combined in a parallel manner to a total thermal resistance, $R_{th\_tot}$:

$$R_{th\ down} = R_{th\_sub} + R_{th\_damp}; \qquad (eq.\ 18)$$

$$R_{th\_up} = R_{th\_substrate} + R_{th\_top} + R_{th\_conv} + R_{rad} \qquad (eq.\ 19)$$

and

$$1\ /\ R_{th\_tot} = 1/R_{th\ down} + 1/R_{th\_up} \qquad (eq.\ 20)$$

Which may be written:

$$R_{th\_tot} = (R_{th\ down} * R_{th\_up})\ /\ (R_{th\ down} + R_{th\_up}). \qquad (eq.\ 21)$$

The temperature increase $\Delta T_{film}$ in the heating film conductor (resistance) is given by:

$$\Delta T_{film} = P * T_{th\_tot}. \qquad (eq.\ 22)$$

The thermal resistance for a solid material $R_{th\_cond}$ due to thermal conduction is given as:

$$R_{th\_cond} = L_{material}\ /\ (Lambda * A). \qquad (eq.\ 23)$$

The thermal resistance convection is given as:

$$R_{th\_conv} = A\ /\ U_{th\_conv} \qquad (eq.\ 24)$$

Some non-limiting examples of materials and thermal resistances are given in Table 1 below.

**Table 1**

| Layer | Material | Lambda [W/mK] | $L_{material}$ [mm] | $R_{th}$/A [mK/Wm$^2$] |
|---|---|---|---|---|
| Dampening | PE | 0.33 | 2 | 57.14 |
| Board/Panel | MDF | 0.14 | 12 | 85.71 |
| Heat film | PET | 0.3 | 0.035 | 0.12 |
| Cover | Laminate | 0.3 | 0.3 | 1.00 |

In the non-limiting example above, an equal heat flow, dQ/dt, in both directions, upwards and downwards, is provided, assuming that the underlay structure has the same temperature as the ambient floor.

The heat flow due to radiation dQ/dt$_{heat}$ is given by:

$$dQ/dt_{heat} = epsilon * SB * (T_{surface}^4 - T_{ambient}^4); (eq. 25)$$

where epsilon is the emissivity factor and SB the Stefan-Boltzmann's constant.

For a surface in a cavity, the radiation has to consider the view factor F, so the heat flow due to radiation becomes:

$$dQ/dt_{heat} = epsilon * SB * (T_{surface}^4 - T_{ambient}^4) * F \text{ (physical dimensions)} ; \hspace{2cm} (eq. 26)$$

where F ranges, i.e. is in the interval, from 0 to 1.

The surface temperature of the panel is thus dependent on heat leakage to the underlay structure. For a well insulated floor panel, e.g. for 18 mm expanded polystyrene (PS), the temperature rise will be approximately 6 degrees for a power supply of $50W/m^2$, and 3 degrees for $25W/m^2$. If the insulation is poor, however, such as e.g. 1 mm PS, the temperature increase will be less, for example 3 degrees at 50 $W/m^2$, according to experiments.

The present invention is not limited to the above described embodiments. Instead, the present invention relates to, and encompasses all different embodiments being included within the scope of the independent claims.

**Claims**

1. A panel (100) comprising:

   - a base layer (101);
   - a heat providing layer (102) attached to said base layer (101), said heat being created by electric energy;
   - a covering layer (103) attached to said heat providing layer (102);
   - first (105) and second (106) opposite longitudinal sides including first (115) and second (116) longitudinal panel coupling means, respectively, arranged for coupling said panel (100) to adjacent panels (201, 202,..., 206);
   - first (107) and second (108) opposite end sides including first (117) and second (118) end panel coupling means, respectively, arranged for coupling said panel (100) to adjacent panels (201,202,..., 206); **characterized by**
   - said first (117) and second (118) end panel coupling means including first (127) and second (128) end panel grooves, respectively, said first (127) and second (128) end panel grooves at least partly extending between said first (105) and second (106) opposite longitudinal sides, and
   - at least one electrical end connector (150) arranged in one or more of said first (127) and second (128) end panel grooves of said first (117) and second (118) end panel coupling means, each of said at least one electrical end connector (150) including first (151) and second (152) end portions and an at least partly resilient portion (153) located between said first (151) and second (152) end portions, said at least partly resilient portion (153) at least partly including an electrically conductive material and at least partly protruding from said one or more of said first (117) and second (118) end panel coupling means, thereby providing an electrical connection between said heat providing layer (102) of said panel (100) and a corresponding heat providing layer (102') of at least one adjacent panel (201, 202) coupled to said panel (100).

2. Panel (100) according to claim 1, wherein said at least partly resilient portion (153) of said at least one electrical end connector (150) is arranged to protrude at least partly from said one or more of said first (127) and second (128) end panel grooves in its relaxed state.

3. Panel (100) according to any one of the preceding claims, wherein said at least partly resilient portion (153) of said at least one electrical end connector (150) is arranged to be pressed into at least one of said first (127) and second (128) end panel grooves by at least one of first (117') and second (118') end panel coupling means of an adjacent panel (201, 202) when said panel (100) is being coupled to said adjacent panel (201, 202).

4. Panel (100) according to any one of the preceding claims, wherein said at least partly resilient portion (153) of said at least one electrical end connector (150) is arranged to at least partly return towards its relaxed state by relaxing into at least one of said first (127') and second (128') end panel grooves of said adjacent panel (201, 202) when said panel (100) is coupled to said adjacent panel (201, 202).

5. Panel (100) according to any one of the preceding claims, wherein said at least partly resilient portion (153) of said at least one electrical end connector (150) is arranged to be snapped into at least one of first (127') and second

(128') end panel grooves of said adjacent panel (201, 202), thereby mechanically locking said panel (100) to said adjacent panel (201, 202).

6. Panel (100) according to any one of the preceding claims, wherein said at least partly resilient portion (153) of said at least one electrical end connector (150) include a first (171) and a second (172) electrically conducting tongue.

7. Panel (100) according to claim 6, wherein said first (171) and second (172) electrically conducting tongues of said at least partly resilient portion (153) are arranged to be in electrical contact with said heat providing layer (102) of said panel (100) and with a corresponding heat providing layer (102') of an adjacent panel (201, 202,..., 206) being coupled to said panel (100).

8. Panel (100) according to claim 6 or 7, wherein said first (171) and second (172) electrically conducting tongues are at least partly wave-formed.

9. Panel (100) according to any one of the preceding claims, wherein said at least partly resilient portion (153) of said at least one electrical end connector (150) is arranged to be located closer to said first end portion (151) than to said second end portion (152), or vice versa.

10. Panel (100) according to any one of the preceding claims, wherein said at least partly resilient portion (153) of said at least one electrical end connector (150) includes at least one in the group of:

   - a resilient material; and
   - first (155) and second (156) portions being resiliently connected to each other.

11. Panel (100) according to any of the preceding claims, wherein at least first (121) and second (122) longitudinal grooves are arranged in said base layer (101) from said first end side (107) to said second end side (108) and facing said heat providing layer (102), said at least first (121) and second (122) longitudinal grooves being arranged in parallel with, and having at least first (131) and second (132) distances to said first (105) and second (106) longitudinal sides, respectively.

12. Panel (100) according to claim 11, further comprising:

   - at least first (161) and second (162) electrical power supply end connectors arranged in said at least first (121) and second (122) longitudinal grooves, respectively, at said first end side (107) or said second end side (108), said at least first (161) and second (162) electrical power supply end connectors being arranged to provide an electrical connection between said heat providing layer (102) of said panel (100) and an electrical energy providing arrangement (810).

13. An electrical end connector (150) insertable into one or more of said first (127) and second (128) end panel grooves of said first (117) and second (118) end panel coupling means of a panel (100) according to any one of claims 1-12; **characterized by**
said at least one electrical end connector (150) including first (151) and second (152) end portions and an at least partly resilient portion (153) located between said first (151) and second (152) end portions, said at least partly resilient portion (153) at least partly including an electrically conductive material and at least partly protruding from said one or more of said first (117) and second (118) end panel coupling means, thereby providing an electrical connection between said heat providing layer (102) of said panel (100) and a corresponding heat providing layer (102') of at least one adjacent panel (201, 202) coupled to said panel (100).

14. Method for coupling a panel (100) to a corresponding adjacent panel (201) both according to any one of claims 1-12; **characterized in:**

   - mechanically coupling said first panel (100) to said adjacent panel (201) by use of said electrical end connector (150) of said panel (100), said first (117) end panel coupling means of said panel (100), and said second (118') end panel coupling means of said adjacent panel (201), thereby locking said first panel (100) to said adjacent panel (201); and
   - electrically connecting said first panel (100) and said adjacent panel (201) by use of said at least one electrical end connector (150) of said first panel (100).

**15.** Heating system (800) **characterized in:**

- at least one panel (100, 201, ..., 206) according to any one of claims 1-12; and
- an electrical energy providing arrangement (810), arranged adjacent to at least one of said first (107, 107') and said second (108, 108') end sides of said at least one panel (100) for providing said electric energy to at least one first (161) and at least one second (162) electrical power supply end connectors of said at least one panel (100).

**Patentansprüche**

**1.** Platte (100), die Folgendes umfasst:

- eine Basisschicht (101);
- eine Wärmebereitstellungsschicht (102), befestigt an der Basisschicht (101), wobei die Wärme durch elektrische Energie erzeugt wird;
- eine Abdeckschicht (103), befestigt an der Wärmebereitstellungsschicht (102);
- erste (105) und zweite (106) einander gegenüberliegende Längsseiten, umfassend erste (115) bzw. zweite (116) längs verlaufende Plattenkopplungsmittel, angeordnet zum Koppeln der Platte (100) mit angrenzenden Platten (201, 202, ..., 206);
- erste (107) und zweite (108) einander gegenüberliegende Endseiten, umfassend erste (117) bzw. zweite (118) Plattenendkopplungsmittel, angeordnet zum Koppeln der Platte (100) mit angrenzenden Platten (201, 202, ..., 206); **dadurch gekennzeichnet, dass**
- die ersten (117) und zweiten (118) Plattenendkopplungsmittel erste (127) bzw. zweite (128) Plattenendnuten umfassen, wobei sich die ersten (127) und zweiten (128) Plattenendnuten zumindest teilweise zwischen den ersten (105) und zweiten (106) einander gegenüberliegenden Längsseiten erstrecken, und
- zumindest einen elektrischen Endverbinder (150), angeordnet in einer oder mehreren der ersten (127) und zweiten (128) Plattenendnuten der ersten (117) und zweiten (118) Plattenendkopplungsmittel, wobei jeder der ein oder mehreren elektrischen Endverbinder (150) erste (151) und zweite (152) Endteile und einen zumindest teilweise elastischen Teil (153), der sich zwischen den ersten (151) und zweiten (152) Endteilen befindet, umfasst, wobei der zumindest eine elastische Teil (153) zumindest teilweise ein elektrisch leitfähiges Material umfasst und zumindest teilweise aus dem einen oder den mehreren der ersten (117) und zweiten (118) Plattenendkopplungsmittel herausragt, dadurch eine elektrische Verbindung zwischen der Wärmebereitstellungsschicht (102) der Platte (100) und einer entsprechenden Wärmebereitstellungsschicht (102') zumindest einer angrenzenden Platte (201, 202), die mit der Platte (100) gekoppelt ist, bereitstellend.

**2.** Platte (100) nach Anspruch 1, wobei der zumindest teilweise elastische Teil (153) des zumindest einen elektrischen Endverbinders (150) angeordnet ist, um zumindest teilweise aus der einen oder den mehreren der ersten (127) und zweiten (128) Plattenendnuten in ihrem entspannten Zustand herauszuragen.

**3.** Platte (100) nach einem der vorhergehenden Ansprüche, wobei der zumindest teilweise elastische Teil (153) des zumindest einen elektrischen Endverbinders (150) angeordnet ist, um in zumindest eine aus der ersten (127) und der zweiten (128) Plattenendnuten durch zumindest eines aus den ersten (117') und den zweiten (118') Plattenendkopplungsmitteln einer angrenzenden Platte (201, 202) gepresst zu werden, wenn die Platte (100) mit der angrenzenden Platte (201, 202) gekoppelt wird.

**4.** Platte (100) nach einem der vorhergehenden Ansprüche, wobei der zumindest teilweise elastische Teil (153) des zumindest einen elektrischen Endverbinders (150) angeordnet ist, um zumindest teilweise in Richtung seines entspannten Zustands zurückzukehren durch Entspannen in zumindest eine aus der ersten (127') und der zweiten (128') Plattenendnut der angrenzenden Platte (201, 202), wenn die Platte (100) mit der angrenzenden Platte (201, 202) gekoppelt ist.

**5.** Platte (100) nach einem der vorhergehenden Ansprüche, wobei der zumindest teilweise elastische Teil (153) des zumindest einen elektrischen Endverbinders (150) angeordnet ist, um in zumindest einer aus den ersten (127') und den zweiten (128') Plattenendnuten der angrenzenden Platte (201, 202) einzurasten, dadurch die Platte (100) mechanisch an der angrenzenden Platte (201, 202) verriegelnd.

**6.** Platte (100) nach einem der vorhergehenden Ansprüche, wobei der zumindest teilweise elastische Teil (153) des zumindest einen elektrischen Endverbinders (150) eine erste (171) und eine zweite (172) elektrisch leitfähige Zunge umfasst.

7. Platte (100) nach Anspruch 6, wobei die ersten (171) und die zweiten (172) elektrisch leitfähigen Zungen des zumindest teilweise elastischen Teils (153) angeordnet sind, um mit der Wärmebereitstellungsschicht (102) der Platte (100) und mit einer entsprechenden Wärmebereitstellungsschicht (102') einer angrenzenden Platte (201, 202, ..., 206), die mit der Platte (100) gekoppelt ist, in elektrischem Kontakt zu sein.

8. Platte (100) nach Anspruch 6 oder 7, wobei die ersten (171) und zweiten (172) elektrisch leitfähigen Zungen zumindest teilweise wellenförmig sind.

9. Platte (100) nach einem der vorhergehenden Ansprüche, wobei der zumindest teilweise elastische Teil (153) des zumindest einen elektrischen Endverbinders (150) angeordnet ist, um näher am ersten Endteil (151) als am zweiten Endteil (152) zu sein, oder umgekehrt.

10. Platte (100) nach einem der vorhergehenden Ansprüche, wobei der zumindest teilweise elastische Teil (153) des zumindest einen elektrischen Endverbinders (150) zumindest eines aus der folgenden Gruppe umfasst:

   - ein elastisches Material; und
   - erste (155) und zweite (156) Teile, die elastisch miteinander verbunden sind.

11. Platte (100) nach einem der vorhergehenden Ansprüche, wobei zumindest erste (121) und zweite (122) Längsnuten in der Basisschicht (101) von der ersten Endseite (107) zur zweiten Endseite (108) angeordnet sind und zur Wärmebereitstellungsschicht (102) zeigend, wobei die zumindest ersten (121) und zweiten (122) Längsnuten parallel mit ersten (105) bzw. zweiten (106) Längsseiten angeordnet sind und zumindest erste (131) bzw. zweite (132) Abstände zu diesen aufweisen.

12. Platte (100) nach Anspruch 11, die ferner Folgendes umfasst:

   - zumindest erste (161) und zweite (162) elektrische Leistungsversorgungsendverbinder, angeordnet in den zumindest ersten (121) bzw. zweiten (122) Längsnuten, an der ersten Endseite (107) oder der zweiten Endseite (108), wobei die zumindest ersten (161) und zweiten (162) elektrischen Leistungsversorgungsendverbinder angeordnet sind, um eine elektrische Verbindung zwischen der Wärmebereitstellungsschicht (102) der Platte (100) und einer elektrischen Energiebereitstellungsanordnung (810) bereitzustellen.

13. Elektrischer Endverbinder (150), einsetzbar in eine oder mehrere aus den ersten (127) und zweiten (128) Plattenendnuten der ersten (117) und zweiten (118) Plattenendkopplungsmittel einer Platte (100) nach einem der Ansprüche 1-12;
   **gekennzeichnet durch**
   die ein oder mehreren elektrischen Endverbinder (150), die erste (151) und zweite (152) Endteile und einen zumindest teilweise elastischen Teil (153), der sich zwischen den ersten (151) und zweiten (152) Endteilen befindet, umfassen, wobei der zumindest eine elastische Teil (153) zumindest teilweise ein elektrisch leitfähiges Material umfasst und zumindest teilweise aus dem einen oder den mehreren der ersten (117) und zweiten (118) Plattenendkopplungsmittel herausragt, **dadurch** eine elektrische Verbindung zwischen der Wärmebereitstellungsschicht (102) der Platte (100) und einer entsprechenden Wärmebereitstellungsschicht (102') zumindest einer angrenzenden Platte (201, 202), die mit der Platte (100) gekoppelt ist, bereitstellend.

14. Verfahren zum Koppeln einer Platte (100) mit einer entsprechenden angrenzenden Platte (201), beide nach einem der Ansprüche 1-12;
   **gekennzeichnet durch**:

   - mechanisches Koppeln der ersten Platte (100) mit der angrenzenden Platte (201) **durch** Verwenden des elektrischen Endverbinders (150) der Platte (100), der ersten (117) Plattenendkopplungsmittel der Platte (100) und der zweiten (118') Plattenendkopplungsmittel der angrenzenden Platte (201), **dadurch** die erste Platte (100) mit der angrenzenden Platte (201) verriegelnd; und
   - elektrisches Verbinden der ersten Platte (100) und der angrenzenden Platte (201) **durch** Verwenden des zumindest einen elektrischen Endverbinders (150) der ersten Platte (100) .

**15.** Heizsystem (800), **gekennzeichnet durch**:

- zumindest eine Platte (100, 201, ..., 206) nach einem der Ansprüche 1-12; und
- eine elektrische Energiebereitstellungsanordnung (810), angrenzend an zumindest eine aus den ersten (107, 107') und zweiten (108, 108') Endseiten der zumindest einen Platte (100) angeordnet, zum Bereitstellen der elektrischen Energie für zumindest einen ersten (161) und zumindest einen zweiten (162) elektrischen Leistungsversorgungsendverbinder der zumindest einen Platte (100).

**Revendications**

**1.** Panneau (100) comprenant :

- une couche de base (101) ;
- une couche fournissant de la chaleur (102) attachée à ladite couche de base (101), ladite chaleur étant créée par de l'énergie électrique ;
- une couche de revêtement (103) attachée à ladite couche fournissant de la chaleur (102) ;
- des premier (105) et deuxième (106) côtés longitudinaux opposés comportant des premier (115) et deuxième (116) moyens de couplage de panneaux longitudinaux, respectivement, agencés pour coupler ledit panneau (100) à des panneaux adjacents (201, 202, ..., 206) ;
- des premier (107) et deuxième (108) côtés d'extrémité opposés comportant des premier (117) et deuxième (118) moyens de couplage de panneaux d'extrémité, respectivement, agencés pour coupler ledit panneau (100) à des panneaux adjacents (201, 202, ..., 206) ; **caractérisé par**
- **le fait que** lesdits premier (117) et deuxième (118) moyens de couplage de panneaux d'extrémité comportent des première (127) et deuxième (128) rainures de panneau d'extrémité, respectivement, lesdites première (127) et deuxième (128) rainures de panneau d'extrémité s'étendant au moins partiellement entre lesdits premier (105) et deuxième (106) côtés longitudinaux opposés, et
- au moins un connecteur électrique d'extrémité (150) disposé dans une ou plusieurs desdites première (127) et deuxième (128) rainures de panneau d'extrémité desdits premier (117) et deuxième (118) moyens de couplage de panneaux d'extrémité, ledit connecteur ou chacun desdits connecteurs électriques d'extrémité (150) comportant des première (151) et deuxième (152) parties d'extrémité et une partie au moins partiellement élastique (153) située entre lesdites première (151) et deuxième (152) parties d'extrémité, ladite partie au moins partiellement élastique (153) comportant au moins partiellement un matériau électriquement conducteur et faisant au moins partiellement saillie depuis lesdits un ou plusieurs desdits premier (117) et deuxième (118) moyens de couplage de panneaux d'extrémité, assurant ainsi une connexion électrique entre ladite couche fournissant de la chaleur (102) dudit panneau (100) et une couche fournissant de la chaleur correspondante (102') d'au moins un panneau adjacent (201, 202) couplé audit panneau (100).

**2.** Panneau (100) selon la revendication 1, dans lequel ladite partie au moins partiellement élastique (153) dudit au moins un connecteur électrique d'extrémité (150) est agencée pour faire saillie au moins partiellement depuis lesdites une ou plusieurs desdites première (127) et deuxième (128) rainures de panneau d'extrémité dans son état relâché.

**3.** Panneau (100) selon l'une quelconque des revendications précédentes, dans lequel ladite partie au moins partiellement élastique (153) dudit au moins un connecteur électrique d'extrémité (150) est agencée pour être comprimée à l'intérieur d'au moins une desdites première (127) et deuxième (128) rainures de panneau d'extrémité par au moins un de premier (117') et deuxième (118') moyens de couplage de panneaux d'extrémité d'un panneau adjacent (201, 202) quand ledit panneau (100) est couplé audit panneau adjacent (201, 202).

**4.** Panneau (100) selon l'une quelconque des revendications précédentes, dans lequel ladite partie au moins partiellement élastique (153) dudit au moins un connecteur électrique d'extrémité (150) est agencée pour retourner au moins partiellement à son état relâché par relâchement à l'intérieur d'au moins une desdites première (127') et deuxième (128') rainures de panneau d'extrémité dudit panneau adjacent (201, 202) quand ledit panneau (100) est couplé audit panneau adjacent (201, 202).

**5.** Panneau (100) selon l'une quelconque des revendications précédentes, dans lequel ladite partie au moins partiellement élastique (153) dudit au moins un connecteur électrique d'extrémité (150) est agencée pour être encliquetée à l'intérieur d'au moins une de première (127') et deuxième (128') rainures de panneau d'extrémité dudit panneau adjacent (201, 202), verrouillant ainsi mécaniquement ledit panneau (100) audit panneau adjacent (201, 202).

**6.** Panneau (100) selon l'une quelconque des revendications précédentes, dans lequel ladite partie au moins partiellement élastique (153) dudit au moins un connecteur électrique d'extrémité (150) comporte une première (171) et une deuxième (172) languette électriquement conductrice.

**7.** Panneau (100) selon la revendication 6, dans lequel lesdites première (171) et deuxième (172) languettes électriquement conductrices de ladite partie au moins partiellement élastique (153) sont agencées pour être en contact électrique avec ladite couche fournissant de la chaleur (102) dudit panneau (100) et avec une couche fournissant de la chaleur correspondante (102') d'un panneau adjacent (201, 202, ..., 206) couplé audit panneau (100) .

**8.** Panneau (100) selon la revendication 6 ou 7, dans lequel lesdites première (171) et deuxième (172) languettes électriquement conductrices sont au moins partiellement en forme de vague.

**9.** Panneau (100) selon l'une quelconque des revendications précédentes, dans lequel ladite partie au moins partiellement élastique (153) dudit au moins un connecteur électrique d'extrémité (150) est agencée pour être située plus près de ladite première partie d'extrémité (151) que de ladite deuxième partie d'extrémité (152), ou vice versa.

**10.** Panneau (100) selon l'une quelconque des revendications précédentes, dans lequel ladite partie au moins partiellement élastique (153) dudit au moins un connecteur électrique d'extrémité (150) comporte au moins un élément dans le groupe constitué par :

- un matériau élastique ; et
- des première (155) et deuxième (156) parties reliées de façon élastique l'une à l'autre.

**11.** Panneau (100) selon l'une quelconque des revendications précédentes, dans lequel au moins des première (121) et deuxième (122) rainures longitudinales sont ménagées dans ladite couche de base (101) depuis ledit premier côté d'extrémité (107) jusqu'audit deuxième côté d'extrémité (108) et en face de ladite couche fournissant de la chaleur (102), lesdites au moins première (121) et deuxième (122) rainures longitudinales étant disposées parallèlement auxdits, et ayant au moins des première (131) et deuxième (132) distances jusqu'auxdits premier (105) et deuxième (106) côtés longitudinaux, respectivement.

**12.** Panneau (100) selon la revendication 11, comprenant en outre :

- au moins des premier (161) et deuxième (162) connecteurs d'alimentation électrique d'extrémité disposés dans lesdites au moins première (121) et deuxième (122) rainures longitudinales, respectivement, au niveau dudit premier côté d'extrémité (107) ou dudit deuxième côté d'extrémité (108), lesdits au moins premier (161) et deuxième (162) connecteurs d'alimentation électrique d'extrémité étant agencés pour assurer une connexion électrique entre ladite couche fournissant de la chaleur (102) dudit panneau (100) et un agencement fournissant de l'énergie électrique (810).

**13.** Connecteur électrique d'extrémité (150) insérable dans une ou plusieurs desdites première (127) et deuxième (128) rainures de panneau d'extrémité desdits premier (117) et deuxième (118) moyens de couplage de panneaux d'extrémité d'un panneau (100) selon l'une quelconque des revendications 1 à 12,
**caractérisé par**
**le fait que** ledit au moins un connecteur électrique d'extrémité (150) comporte des première (151) et deuxième (152) parties d'extrémité et une partie au moins partiellement élastique (153) située entre lesdites première (151) et deuxième (152) parties d'extrémité, ladite partie au moins partiellement élastique (153) comportant au moins partiellement un matériau électriquement conducteur et faisant au moins partiellement saillie depuis lesdits un ou plusieurs desdits premier (117) et deuxième (118) moyens de couplage de panneaux d'extrémité, assurant ainsi une connexion électrique entre ladite couche fournissant de la chaleur (102) dudit panneau (100) et une couche fournissant de la chaleur correspondante (102') d'au moins un panneau adjacent (201, 202) couplé audit panneau (100).

**14.** Procédé destiné à couplé un panneau (100) à un panneau adjacent correspondant (201), tous deux selon l'une quelconque des revendications 1 à 12,
**caractérisé par**

- le couplage mécanique dudit premier panneau (100) audit panneau adjacent (201) au moyen dudit connecteur électrique d'extrémité (150) dudit panneau (100), dudit premier (117) moyen de couplage de panneau d'extrémité dudit panneau (100), et dudit deuxième (118') moyen de couplage de panneau d'extrémité dudit panneau adjacent (201), pour verrouiller ainsi ledit premier panneau (100) audit panneau adjacent (201) ; et
- la connexion électrique dudit premier panneau (100) et dudit panneau adjacent (201) au moyen dudit au moins un connecteur électrique d'extrémité (150) dudit premier panneau (100).

15. Système de chauffage (800) **caractérisé par** :

- au moins un panneau (100, 201, ..., 206) selon l'une quelconque des revendications 1 à 12 ; et
- un agencement fournissant de l'énergie électrique (810), disposé au voisinage d'au moins un desdits premiers (107, 107') et desdits deuxièmes (108, 108') côtés d'extrémité dudit au moins un panneau (100) pour fournir ladite énergie électrique à au moins un premier (161) et au moins un deuxième (162) connecteur d'alimentation électrique d'extrémité dudit au moins un panneau (100).

100

105

108

121

115

151

171

153

172

150

117

107

122

152

116

106

103

102

101

118

Fig. 1

150, 153

117

100

127

Fig. 2a

105, 115

100

151

153

150

117

106, 116

127

152

Fig. 2b

Fig. 2c

Fig. 2d

Fig. 2e

150, 153

202 100

108', 118' 107, 117

Fig. 2f

105

100

105'

202

106

106' Fig. 2g

$D_{end\_groove1}$

$D_{end\_groove2}$

$H_{end\_groove}$

$H_{end\_groove}$

107, 117

108, 118

127

128

100

103 102

101

Fig. 3c

151

155

L1

171

157

172

156

150

L

152

Fig. 3a

171, 172

150

153

$H_{end\_con}$

$W_{end\_con}$

Fig. 3b

Fig. 4a

Fig. 4b

Fig. 4c

Fig. 5a

Fig. 5b

EP 3 884 213 B1

Fig. 5c

Fig. 5d

Fig. 5e

EP 3 884 213 B1

Fig. 6

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080210679 A
- US 20060289144 A
- KR 20150133464
- WO 2018217152 A
- EP 1884716 A